# EUROPEAN PATENT APPLICATION

(11) **EP 4 498 727 A1**
(43) Date of publication of application: **29.01.2025**
(21) Application number: 23795402.9
(22) Date of filing: 25.04.2023
(51) Int. Cl.: H04W 28/06

(54) **COMMUNICATION METHOD AND COMMUNICATION APPARATUS**

(30) Priority: 27.04.2022 CN 202210454309
(71) Applicant: Huawei Technologies Co., Ltd., Shenzhen, Guangdong 518129 (CN)
(72) Inventor: PAN, Qi, Shenzhen, Guangdong 518129 (CN); NI, Hui, Shenzhen, Guangdong 518129 (CN); HUANG, Zhenglei, Shenzhen, Guangdong 518129 (CN)
(74) Representative: Pfenning, Meinig & Partner mbB
(86) International application number: PCT/CN2023/090571
(87) International publication number: WO 2023/207970

(57) **Abstract**

Embodiments of this application provide a communication method and a communication apparatus. According to the method in this application, if a user plane network element obtains network status information of a to-be-monitored service flow, the user plane network element sends a second transport layer feedback message to an application server based on a first transport layer feedback message received from a terminal device, where the second transport layer feedback message includes information indicating a network status, so that the application server can determine the network status of the to-be-monitored service flow based on the second transport layer feedback message. Because the second transport layer feedback message sent by the user plane network element to the application server includes the information indicating the network status, even if the terminal device does not support a capability of exposing the network status information by using a transport layer, the network status information of the to-be-monitored service flow can be exposed to the application server by using the transport layer.

## Description

This application claims priority to Chinese Patent Application No. 202210454309.2, filed with the China National Intellectual Property Administration on April 27, 2022 and entitled "COMMUNICATION METHOD AND COMMUNICATION APPARATUS", which is incorporated herein by reference in its entirety.

### TECHNICAL FIELD

Embodiments of this application relate to the communication field, and more specifically, to a communication method and a communication apparatus.

### BACKGROUND

If a third-party application can detect a network status in real time, the third-party application can perform adjustment accordingly based on the network status, to ensure service experience of a user and maximize network utilization. For example, in a media application, an application side needs to adjust a bit rate in real time based on a network status, to avoid user experience deterioration caused by a network status change. Therefore, how to quickly expose more network status information, such as available bandwidth and congestion statuses, to third-party application servers is a key issue, especially for real-time services such as extended reality (extended reality, XR) and cloud gaming.

In an implementation, a radio access network (radio access network, RAN) may monitor a network congestion status of an air interface between the RAN and user equipment (user equipment, UE), and expose network status information between the RAN and the UE by adding an explicit congestion notification (explicit congestion notification, ECN) mark to an internet protocol (internet protocol, IP) header of a downlink data packet. Specifically, the RAN adds the ECN mark to the IP header of the downlink data packet, and sends the downlink data packet to the UE. The UE collects statistics on a quantity of downlink data packets carrying the ECN mark and/or a quantity of payload octets of the downlink data packets carrying the ECN mark in at least one received downlink data packet, and sends a statistical result to an application server side by using a transport layer feedback mechanism, so that a third-party application can obtain a network status.

However, in the foregoing implementation, if the UE does not support sending of the statistical result to the application server side by using the transport layer feedback mechanism, a third-party application server cannot quickly obtain the network status. In addition, because the RAN is closer to a user side than a core network element, and there is a possibility that the RAN is physically damaged, there is a security risk to some extent that the RAN parses an IP layer of the downlink data packet and adds the ECN mark to the IP header of the downlink data packet. Finally, in the foregoing manner, the RAN sends the network status information to a UE side, and then the UE side sends the network status information to the application server side. A longer transmission link cannot ensure that the network status information is quickly exposed in real time.

### SUMMARY

Embodiments of this application provide a communication method, to optimize a manner of feeding back network status information to an application server by using a transport layer.

According to a first aspect, a communication method is provided. The method includes: A user plane network element obtains network status information of a to-be-monitored service flow; the user plane network element receives a first transport layer feedback message from a terminal device, where the first transport layer feedback message corresponds to at least one data packet in the to-be-monitored service flow; and the user plane network element sends a second transport layer feedback message to an application server based on the first transport layer feedback message, where the second transport layer feedback message includes information indicating a network status of the to-be-monitored service flow.

Based on the foregoing technical solution, after obtaining the network status information of the to-be-monitored service flow and receiving the first transport layer feedback message from the terminal device, the user plane network element sends the second transport layer feedback message to the application server based on the first transport layer feedback message, where the second transport layer feedback message includes the information indicating the network status of the to-be-monitored service flow, so that the application server can determine the network status of the to-be-monitored service flow based on the second transport layer feedback message. In this way, the application server can adjust a service parameter of the to-be-monitored service flow based on the network status of the to-be-monitored service flow, for example, dynamically adjust a media coding configuration to change a bit rate, to ensure service experience of a user and improve effective utilization of network resources.

In addition, according to the method provided in this embodiment of this application, an access network device may send the network status information of the to-be-monitored service flow to the user plane network element, and then the user plane network element exposes the network status information to the application server by using a transport layer. Compared with a manner in which the access network device exposes the network status information by adding an explicit congestion notification (explicit congestion notification, ECN) mark to an internet protocol (internet protocol, IP) header of an uplink/downlink data packet, this application provides higher security because the access network device does not need to parse the IP header of the downlink data packet. In addition, the network status information does not need to be sent to the terminal device, and then is sent by the terminal device to an application server side. In this way, the network status information can be fed back more quickly.

In addition, the second transport layer feedback message sent by the user plane network element to the application server includes the information indicating the network status. Therefore, according to the method provided in this embodiment of this application, the network status information of the to-be-monitored service flow can be exposed to the application server by using the transport layer without considering a capability of the terminal device. This avoids the following problem: When the terminal device does not support a capability of exposing the network status information by using the transport layer, the network status information of the to-be-monitored service flow cannot be exposed to the application server, and therefore an application cannot perform dynamic adjustment, thereby affecting user experience.

That the user plane network element sends a second transport layer feedback message to an application server based on the first transport layer feedback message includes: The user plane network element adds the information indicating the network status of the to-be-monitored service flow to the first transport layer feedback message, to generate the second transport layer feedback message; or the user plane network element generates the second transport layer feedback message by modifying values of some fields in the first transport layer feedback message. It should be noted that source addresses of the first transport layer feedback message and the second transport layer feedback message are the same, to be specific, the source addresses of the first transport layer feedback message and the second transport layer feedback message are both an address of the terminal device.

Based on the foregoing technical solution, the user plane network element adds the information indicating the network status of the to-be-monitored service flow to the first transport layer feedback message to generate the second transport layer feedback message, or generates the second transport layer feedback message by modifying values of some fields in the first transport layer feedback message, so that the second transport layer feedback message includes the information indicating the network status of the to-be-monitored service flow. In other words, the user plane network element assists the terminal device in exposing the network status information of the to-be-monitored service flow to the application server by using the transport layer. Therefore, according to the method provided in this embodiment of this application, the network status information of the to-be-monitored service flow can be exposed to the application server by using the transport layer without considering the capability of the terminal device.

For example, a transport layer protocol used for the to-be-monitored service flow is the transmission control protocol (transport control protocol, TCP), and the information indicating the network status information of the to-be-monitored service flow includes at least one of the following: a quantity of data packets carrying a congestion experienced (congestion experienced, CE) mark, a quantity of payload octets of the data packets carrying the CE mark, a quantity of payload octets of data packets carrying an explicit congestion notification capable transport (ECN capable transport, ECT) 1 mark, or a quantity of payload octets of data packets carrying an ECTO mark.

For another example, a transport layer protocol used for the to-be-monitored service flow is a quick user datagram protocol (user datagram protocol, UDP) internet connection (quick UDP Internet connection, QUIC) protocol, and the information indicating the network information of the to-be-monitored service flow includes at least one of the following: a quantity of data packets carrying a CE mark, a quantity of data packets carrying an ECT1 mark, or a quantity of data packets carrying an ECTO mark.

For another example, a transport layer protocol used for the to-be-monitored service flow is the real-time transport protocol (real-time transport protocol, RTP) or the real-time transport control protocol (real-time transport control protocol, RTCP), and the information for determining the network information of the to-be-monitored service flow includes at least one of the following: a quantity of data packets carrying an ECT1 mark, a quantity of data packets carrying an ECTO mark, a quantity of data packets carrying a CE mark, a quantity of lost packets, a quantity of repeatedly received data packets, or a quantity of data packets carrying no ECN mark.

With reference to the first aspect, in some implementations of the first aspect, the method further includes: The user plane network element generates, based on the network status information of the to-be-monitored service flow and an ECN mark (ECN mark or ECN label) of the at least one data packet, the information indicating the network status of the to-be-monitored service flow.

With reference to the first aspect, in some implementations of the first aspect, the method further includes: The user plane network element receives the at least one data packet from the application server; and the user plane network element determines the ECN mark of the at least one data packet. In other words, the user plane network element receives the at least one data packet from the application server, and collects statistics on the ECN mark of the at least one data packet.

With reference to the first aspect, in some implementations of the first aspect, the method further includes: The user plane network element obtains the ECN mark of the at least one data packet from the first transport layer feedback message.

Based on the foregoing technical solution, if the terminal device supports the capability of feeding back the network status information by using the transport layer, after receiving the at least one data packet, the terminal device may collect statistics on the ECN mark of the at least one data packet, and add the ECN mark of the at least one data packet to the first transport layer feedback message, so that the user plane network element can obtain the ECN mark of the at least one data packet.

With reference to the first aspect, in some implementations of the first aspect, the method further includes: The user plane network element receives a first transport layer data packet from the terminal device, where the first transport layer data packet corresponds to the to-be-monitored service flow; and the user plane network element sends a second transport layer data packet to the application server based on the first transport layer data packet, where the second transport layer data packet includes indication information indicating that feedback of the network status information by using a transport layer is supported.

Based on the foregoing technical solution, the user plane network element sends the second transport layer data packet to the application server based on the first transport layer data packet, so that the application server can determine, based on the indication information included in the second transport layer data packet, that the terminal device supports feedback of the network status information by using the transport layer. Therefore, after receiving the second transport layer feedback message, the application server may determine that the second transport layer feedback message includes the information indicating the network status.

With reference to the first aspect, in some implementations of the first aspect, the method further includes: The user plane network element determines that the first transport layer data packet includes information indicating that feedback of the network status information by using the transport layer is not supported.

Based on the foregoing technical solution, when the user plane network element determines that the first transport layer data packet includes the information indicating that feedback of the network status information by using the transport layer is not supported, the user plane network element sends the second transport layer data packet to the application server based on the first transport layer data packet, so that resource consumption of the user plane network element can be reduced. For example, if the first transport layer data packet includes the information indicating that feedback of the network status information by using the transport layer is supported, the user plane network element may directly send the first transport layer data packet to the application server, with no need of sending the second transport layer data packet to the application server based on the first transport layer data packet.

With reference to the first aspect, in some implementations of the first aspect, the method further includes: The user plane network element receives a TCP connection establishment message from the terminal; and determining, by the user plane network element based on values of three bits: an accurate ECN (accurate ECN, AE) bit, a congestion window reduced (congestion window reduced, CWR) bit, and an ECN echo (ECN echo, ECE) bit in a TCP header of the TCP connection establishment message, whether the terminal device supports the capability of exposing the network status information by using the transport layer.

For example, when the values of the three bits: AE, CWR, and ECE are "1 1 1", "0 1 0", "0 1 1", "1 1 0", or "1 0 0", the user plane network element determines that the terminal device supports exposure of the network status information by using the transport layer; otherwise, the user plane network element determines that the terminal device does not support the capability of exposing of the network status information by using the transport layer.

With reference to the first aspect, in some implementations of the first aspect, the method further includes: The user plane network element receives a data packet from the terminal device; and the user plane network element determines, based on a value of an ECN field in an IP header of the data packet, whether the terminal device supports the capability of exposing the network status information by using the transport layer.

For example, if the value of the ECN field in the IP header of the data packet is "01", "10", or "11", the user plane network element determines that the terminal device supports the capability of exposing the network status information by using the transport layer; otherwise, the user plane network element determines that the terminal device does not support the capability of exposing the network status information by using the transport layer.

With reference to the first aspect, in some implementations of the first aspect, the method further includes: The user plane network element receives uplink session description protocol information from the terminal device; and the user plane network element determines, based on the uplink session description protocol information, whether the terminal device supports the capability of exposing the network status information by using the transport layer.

For example, if the uplink session description protocol information does not include a parameter "ecn-capable-rtp", the user plane network element determines that the terminal device does not support the capability of exposing the network status information by using the transport layer; otherwise, the user plane network element determines that the terminal device does not support the capability of exposing the network status information by using the transport layer.

With reference to the first aspect, in some implementations of the first aspect, the method further includes: When the application server supports the capability of exposing the network status information by using the transport layer, the user plane network element generates, based on the network status information of the to-be-monitored service flow, the information indicating the network status of the to-be-monitored service flow.

With reference to the first aspect, in some implementations of the first aspect, the method further includes: The user plane network element receives a TCP connection establishment message from the application server; and determining, by the user plane network element based on values of three bits: AE, CWR, and ECE in a TCP header of the TCP connection establishment message, that the application server supports the capability of exposing the network status information by using the transport layer.

Based on the foregoing technical solution, when determining that the application server supports the capability of exposing the network status information by using the transport layer, the user plane network element may generate the information indicating the network status of the to-be-monitored service flow, and send the second transport layer feedback message to the application server, to avoid unnecessary resource consumption. For example, if the user plane network element determines that the application server does not support the capability of exposing the network status information by using the transport layer, the user plane network element does not generate the information indicating the network status of the to-be-monitored service flow, and does not send the second transport layer feedback message to the application server.

For example, when the values of the three bits: AE, CWR, and ECE, are "1 1 1", "0 1 0", "0 1 1", "1 1 0", or "1 0 0", the user plane network element determines that the application server supports exposure of the network status information by using the transport layer.

With reference to the first aspect, in some implementations of the first aspect, the method further includes: The user plane network element receives a data packet from the application server; and the user plane network element determines, based on a value of an ECN field in an IP header of the data packet, that the application server supports the capability of exposing the network status information by using the transport layer.

Based on the foregoing technical solution, when determining that the application server supports the capability of exposing the network status information by using the transport layer, the user plane network element may generate the information indicating the network status of the to-be-monitored service flow, and send the second transport layer feedback message to the application server, to avoid unnecessary resource consumption. For example, if the user plane network element determines that the application server does not support the capability of exposing the network status information by using the transport layer, the user plane network element does not generate the information indicating the network status of the to-be-monitored service flow, and does not send the second transport layer feedback message to the application server.

For example, if the value of the ECN field in the IP header of the data packet is "01", "10", or "11", the user plane network element determines that the application server supports the capability of exposing the network status information by using the transport layer.

With reference to the first aspect, in some implementations of the first aspect, the method further includes: The user plane network element receives downlink session description protocol information from the application server; and the user plane network element determines, based on the downlink session description protocol information, that the application server supports the capability of exposing the network status information by using the transport layer.

Based on the foregoing technical solution, when determining that the application server supports the capability of exposing the network status information by using the transport layer, the user plane network element may generate the information indicating the network status of the to-be-monitored service flow, and send the second transport layer feedback message to the application server, to avoid unnecessary resource consumption. For example, if the user plane network element determines that the application server does not support the capability of exposing the network status information by using the transport layer, the user plane network element does not generate the information indicating the network status of the to-be-monitored service flow, and does not send the second transport layer feedback message to the application server.

For example, if the downlink session description protocol information includes a parameter "ecn-capable-rtp", the user plane network element determines that the application server supports the capability of exposing the network status information by using the transport layer.

With reference to the first aspect, in some implementations of the first aspect, the method further includes: The user plane network element receives a network status information exposure rule from a session management network element, where the network status information exposure rule is for determining a manner of exposing the network status information of the to-be-monitored service flow by using the transport layer.

For example, the network status information exposure rule includes one or more of the following: indication information indicating to intervene in a transport layer capability negotiation procedure between the terminal device and the application server, indication information indicating the transport layer protocol used for the to-be-monitored service flow, a manner of receiving the network status information of the to-be-monitored service flow from an access network device, a manner of detecting the first transport layer feedback message, or a manner of adding the information indicating the network status information of the to-be-monitored service flow to the first transport layer feedback message, where the transport layer capability negotiation procedure is for determining whether feedback of the network status information by using the transport layer is supported.

According to a second aspect, a communication method is provided. The method includes: A policy control function network element receives, from an application function network element, indication information indicating to externally expose network status information of a to-be-monitored service flow by using a transport layer; the policy control function network element determines a monitoring policy of the to-be-monitored service flow and a network status information exposure policy based on the indication information indicating to expose the network status information of the to-be-monitored service flow by using the transport layer, where the monitoring policy is for determining monitoring configuration information of the to-be-monitored service flow, the monitoring configuration information is for monitoring a network status of the to-be-monitored service flow, the network status information exposure policy is for determining a network status information exposure rule, and the network status information exposure rule is for determining a manner of exposing the network status information of the to-be-monitored service flow by using the transport layer; and the policy control function network element sends the monitoring policy and the network status information exposure policy to a session management network element.

Based on the foregoing technical solution, if the policy control function network element receives the indication information indicating to expose the network status information of the to-be-monitored service flow by using the transport layer, the policy control function network element determines the monitoring policy and the network status information exposure policy, and sends the monitoring policy and the network status information exposure policy to the session management network element, so that the session management network element can send the monitoring configuration information to an access network device based on the monitoring policy, and send the network status information exposure rule to a user plane network element based on the network status information exposure policy. In this way, the access network device can send the network status information of the to-be-monitored service flow to the user plane network element based on the monitoring configuration information, and the user plane network element can determine, based on the network status information exposure rule, to expose the network status information of the to-be-monitored service flow to an application server by using the transport layer.

For example, the network status information exposure policy or the network status information exposure rule includes one or more of the following: indication information indicating to intervene in a transport layer capability negotiation procedure between a terminal device and an application server, indication information indicating a transport layer protocol used for the to-be-monitored service flow, a manner of receiving the network status information of the to-be-monitored service flow from an access network device, a manner of detecting a transport layer feedback message that is from the terminal device, a manner of adding information indicating the network status information of the to-be-monitored service flow to the transport layer feedback message, or indication information indicating to add a CE mark to at least one data packet based on the network status information of the to-be-monitored service flow, where the transport layer capability negotiation procedure includes a procedure of determining whether a capability of feeding back the network status information by using the transport layer is supported.

With reference to the second aspect, in some implementations of the second aspect, the method further includes: The policy control function network element receives, from the application function network element, indication information indicating to intervene in the transport layer capability negotiation procedure between the terminal device and the application server.

With reference to the second aspect, in some implementations of the second aspect, the method further includes: The policy control function network element receives, from the application function network element, the indication information that indicates the transport layer protocol used for the to-be-monitored service flow.

According to a third aspect, a communication method is provided. The method includes: A session management network element receives a monitoring policy of a to-be-monitored service flow and a network status information exposure policy from a policy control function network element; the session management network element sends a network status information exposure rule to a user plane network element based on the network status information exposure policy, where the network status information exposure rule is for determining a manner of exposing the network status information of the to-be-monitored service flow by using a transport layer; and the session management network element sends monitoring configuration information of the to-be-monitored service flow to an access network device based on the monitoring policy, where the monitoring configuration information is for monitoring a network status of the to-be-monitored service flow.

Based on the foregoing technical solution, if the session management network element receives the monitoring policy and the network status information exposure policy, the session management network element may send the monitoring configuration information to the access network device based on the monitoring policy, and send the network status information exposure rule to the user plane network element based on the network status information exposure policy. In this way, the access network device can send the network status information of the to-be-monitored service flow to the user plane network element based on the monitoring configuration information, and the user plane network element can determine, based on the network status information exposure rule, to expose the network status information of the to-be-monitored service flow to an application server by using the transport layer.

For example, the network status information exposure policy or the network status information exposure rule includes one or more of the following: indication information indicating to intervene in a transport layer capability negotiation procedure between a terminal device and an application server, indication information indicating a transport layer protocol used for the to-be-monitored service flow, a manner of receiving the network status information of the to-be-monitored service flow from an access network device, a manner of detecting a transport layer feedback message that is from the terminal device, a manner of adding information indicating the network status information of the to-be-monitored service flow to the transport layer feedback message, or indication information indicating to add a CE mark to at least one data packet based on the network status information of the to-be-monitored service flow, where the transport layer capability negotiation procedure includes a procedure of determining whether a capability of feeding back the network status information by using the transport layer is supported.

According to a fourth aspect, a communication method is provided. The method includes: An application server sends, to a policy control function network element, indication information indicating to externally expose network status information of a to-be-monitored service flow by using a transport layer; the application server sends at least one data packet in the to-be-monitored service flow; and the application server receives a second transport layer feedback message from a user plane network element, where the second transport layer feedback message corresponds to the at least one data packet, and the second transport layer feedback message includes information indicating the network status information of the to-be-monitored service flow.

Based on the foregoing technical solution, the second transport layer feedback message received by the application server includes the information indicating the network status of the to-be-monitored service flow, and the second transport layer feedback message is generated based on a first transport layer feedback message sent by a terminal device. Therefore, the application server can determine the network status of the to-be-monitored service flow based on the second transport layer feedback message. In this way, the application server can adjust a service parameter of the to-be-monitored service flow based on the network status of the to-be-monitored service flow, for example, correspondingly adjust a media bit rate, to ensure service experience of a user and improve effective utilization of network resources.

For example, a transport layer protocol used for the to-be-monitored service flow is TCP, and the information indicating the network status information of the to-be-monitored service flow includes at least one of the following: a quantity of data packets carrying a CE mark, a quantity of payload octets of the data packets carrying the CE mark, a quantity of payload octets of data packets carrying an ECT1 mark, or a quantity of payload octets of data packets carrying an ECTO mark.

For another example, a transport layer protocol used for the to-be-monitored service flow is the QUIC protocol, and the information indicating the network information of the to-be-monitored service flow includes at least one of the following: a quantity of data packets carrying a CE mark, a quantity of data packets carrying an ECT1 mark, or a quantity of data packets carrying an ECTO mark.

For another example, a transport layer protocol used for the to-be-monitored service flow is RTP/RTCP, and the information for determining the network information of the to-be-monitored service flow includes one or more of the following: a quantity of data packets carrying an ECT 1 mark, a quantity of data packets carrying an ECTO mark, a quantity of data packets carrying a CE mark, a quantity of lost packets, a quantity of repeatedly received data packets, or a quantity of data packets carrying no ECN mark.

With reference to the fourth aspect, in some implementations of the fourth aspect, the method further includes: The application server sends, to the policy control function network element, indication information indicating to intervene in a transport layer capability negotiation procedure between the terminal device and the application server, where the transport layer capability negotiation procedure includes a procedure of determining whether a capability of feeding back the network status information by using the transport layer is supported.

Based on the foregoing technical solution, the application server sends, to the policy control function network element, the indication information indicating to intervene in the transport layer capability negotiation procedure between the terminal device and the application server. Therefore, the network status information exposure policy sent by the policy control function network element to the session management network element may include the indication information, and the network status information exposure rule sent by the session management network element to the user plane network element may also include the indication information. In this way, the user plane network element can intervene in the transport layer capability negotiation procedure between the terminal device and the application server based on the indication information. For example, when the terminal device does not support a capability of exposing the network status information by using the transport layer, the user plane network element, in place of the terminal device, sends, to the application server, indication information indicating that a capability of exposing the network status information by using the transport layer is supported, so that the network status information of the to-be-monitored service flow can be exposed to the application server by using the transport layer. Specifically, the user plane network element determines, by monitoring a capability negotiation message between the terminal device and the application server, that the terminal device does not support the capability of exposing the network status information by using the transport layer, and modifies capability information of a terminal device side, to perform capability negotiation with the application server in place of the terminal device.

With reference to the fourth aspect, in some implementations of the fourth aspect, the method further includes: The application server sends, to the policy control function network element, the indication information indicating the transport layer protocol used for the to-be-monitored service flow.

Based on the foregoing technical solution, the application server sends, to the policy control function network element, the indication information indicating the transport layer protocol used for the to-be-monitored service flow, and finally sends the indication information to the user plane network element via the session management network element, to ensure that the user plane network element can sense a type of the transport layer protocol used for the current to-be-monitored service, such as TCP or RTP/RTCP.

According to a fifth aspect, a communication method is provided. The method includes: A user plane network element obtains network status information of a to-be-monitored service flow; and the user plane network element sends at least one data packet in the to-be-monitored service flow to a terminal device based on the network status information of the to-be-monitored service flow, where a ratio of a quantity of data packets carrying a CE mark in the at least one data packet to a quantity of the at least one data packet is for determining a network status of the to-be-monitored service flow.

Based on the foregoing technical solution, if the user plane network element obtains the network status information of the to-be-monitored service flow, the user plane network element adds the CE mark to the at least one data packet based on the network status information of the to-be-monitored service flow, and sends the at least one data packet to the terminal device. Further, the terminal device collects statistics on the ECN mark of the at least one data packet, and feeds back a statistical result to the application server by using a transport layer feedback message, so that the application server can determine the network status of the to-be-monitored service flow based on the ECN mark of the at least one data packet. In this way, the application server can adjust a service parameter of the to-be-monitored service flow based on the network status of the to-be-monitored service flow, for example, adjust a media bit rate, to ensure service experience of a user and improve effective utilization of network resources.

In addition, according to the method provided in this embodiment of this application, an access network device may send the network status information of the to-be-monitored service flow to the user plane network element, and then the user plane network element exposes the network status information to the application server by adding the CE mark to the at least one data packet. Compared with a manner in which the access network device exposes the network status information by adding an ECN mark to an IP header of a downlink data packet, this application provides higher security because the access network device does not need to parse the IP header of the downlink data packet.

With reference to the fifth aspect, in some implementations of the fifth aspect, the method further includes: The user plane network element receives a network status information exposure rule from a session management network element, where the network status information exposure rule is for determining a manner of exposing the network status information of the to-be-monitored service flow, and the network status information exposure rule includes one or more of the following: a manner of receiving the network status information of the to-be-monitored service flow from an access network device, or indication information indicating to add the CE mark to the at least one data packet based on the network status information of the to-be-monitored service flow.

According to a sixth aspect, a communication apparatus is provided. The communication apparatus includes an obtaining unit and a transceiver unit. The obtaining unit is configured to obtain network status information of a to-be-monitored service flow. The transceiver unit is configured to receive a first transport layer feedback message from a terminal device, where the first transport layer feedback message corresponds to at least one data packet in the to-be-monitored service flow. The transceiver unit is further configured to send a second transport layer feedback message to an application server based on the first transport layer feedback message, where the second transport layer feedback message includes information indicating a network status of the to-be-monitored service flow.

In a possible implementation, the obtaining unit is the transceiver unit, and the transceiver unit is specifically configured to receive the network status information of the to-be-monitored service flow from an access network device.

In another possible implementation, the obtaining unit is a processing unit. The processing unit is specifically configured to monitor a network status of the to-be-monitored service flow based on the monitoring configuration information of the to-be-monitored service flow, to obtain the network status information of the to-be-monitored service flow.

For example, a transport layer protocol used for the to-be-monitored service flow is TCP, and the information indicating the network status information of the to-be-monitored service flow includes at least one of the following: a quantity of data packets carrying a CE mark, a quantity of payload octets of the data packets carrying the CE mark, a quantity of payload octets of data packets carrying an ECT1 mark, or a quantity of payload octets of data packets carrying an ECTO mark.

For another example, a transport layer protocol used for the to-be-monitored service flow is the QUIC protocol, and the information indicating the network information of the to-be-monitored service flow includes at least one of the following: a quantity of data packets carrying a CE mark, a quantity of data packets carrying an ECT1 mark, or a quantity of data packets carrying an ECTO mark.

For another example, a transport layer protocol used for the to-be-monitored service flow is RTP/RTCP, and the information for determining the network information of the to-be-monitored service flow includes at least one of the following: a quantity of data packets carrying an ECT 1 mark, a quantity of data packets carrying an ECTO mark, a quantity of data packets carrying a CE mark, a quantity of lost packets, a quantity of repeatedly received data packets, or a quantity of data packets carrying no ECN mark.

With reference to the sixth aspect, in some implementations of the sixth aspect, the communication apparatus further includes a processing unit, and the processing unit is configured to generate, based on the network status information of the to-be-monitored service flow and an ECN mark of the at least one data packet, the information indicating the network status of the to-be-monitored service flow.

With reference to the sixth aspect, in some implementations of the sixth aspect, the transceiver unit is further configured to receive the at least one data packet from the application server, and the processing unit is further configured to determine the ECN mark of the at least one data packet.

With reference to the sixth aspect, in some implementations of the sixth aspect, the processing unit is further configured to obtain the ECN mark of the at least one data packet from the first transport layer feedback message.

With reference to the sixth aspect, in some implementations of the sixth aspect, the transceiver unit is further configured to receive a first transport layer data packet from the terminal device, where the first transport layer data packet corresponds to the to-be-monitored service flow. The transceiver unit is further configured to send a second transport layer data packet to the application server based on the first transport layer data packet, where the second transport layer data packet includes indication information indicating that feedback of the network status information by using a transport layer is supported.

With reference to the sixth aspect, in some implementations of the sixth aspect, the processing unit is further configured to determine that the first transport layer data packet includes information indicating that feedback of the network status information by using the transport layer is not supported.

With reference to the sixth aspect, in some implementations of the sixth aspect, the transceiver unit is further configured to receive a TCP connection establishment message from the terminal. The processing unit is further configured to determine, based on values of three bits: AE, CWR, and ECE in a TCP header of the TCP connection establishment message, whether the terminal device supports the capability of exposing the network status information by using the transport layer.

With reference to the sixth aspect, in some implementations of the sixth aspect, the communication apparatus further includes a processing unit. The transceiver unit is configured to receive a data packet from the terminal device. The processing unit is further configured to determine, based on a value of an ECN field in an IP header of the data packet, whether the terminal device supports the capability of exposing the network status information by using the transport layer.

With reference to the sixth aspect, in some implementations of the sixth aspect, the transceiver unit is further configured to receive uplink session description protocol information from the terminal device; and the processing unit is further configured to determine, based on the uplink session description protocol information, whether the terminal supports the capability of exposing the network status information by using the transport layer.

With reference to the sixth aspect, in some implementations of the sixth aspect, the communication apparatus further includes a processing unit. When the application server supports the capability of exposing the network status information by using the transport layer, the processing unit is configured to generate, based on the network status information of the to-be-monitored service flow, the information indicating the network status of the to-be-monitored service flow.

With reference to the sixth aspect, in some implementations of the sixth aspect, the transceiver unit is further configured to receive a TCP connection establishment message from the application server. The processing unit is further configured to determine, based on values of three bits: AE, CWR, and ECE in a TCP header of the TCP connection establishment message, that the application server supports the capability of exposing the network status information by using the transport layer.

With reference to the sixth aspect, in some implementations of the sixth aspect, the transceiver unit is further configured to receive a data packet from the application server. The processing unit is further configured to determine, based on a value of an ECN field in an IP header of the data packet, that the application server supports the capability of exposing the network status information by using the transport layer.

With reference to the sixth aspect, in some implementations of the sixth aspect, the transceiver unit is further configured to receive downlink session description protocol information from the application server; and the processing unit is further configured to determine, based on the downlink session description protocol information, whether the application server supports the capability of exposing the network status information by using the transport layer.

With reference to the sixth aspect, in some implementations of the sixth aspect, the transceiver unit is further configured to receive a network status information exposure rule from a session management network element, where the network status information exposure rule is for determining a manner of exposing the network status information of the to-be-monitored service flow by using the transport layer.

For example, the network status information exposure rule includes one or more of the following: indication information indicating to intervene in a transport layer capability negotiation procedure between the terminal device and the application server, indication information indicating the transport layer protocol used for the to-be-monitored service flow, a manner of receiving the network status information of the to-be-monitored service flow from the access network device, a manner of detecting the first transport layer feedback message, or a manner of adding the information indicating the network status information of the to-be-monitored service flow to the first transport layer feedback message, where the transport layer capability negotiation procedure is for determining whether feedback of the network status information by using the transport layer is supported.

According to a seventh aspect, a communication apparatus is provided. The communication apparatus includes a transceiver unit and a processing unit. The transceiver unit is configured to receive, from an application function network element, indication information indicating to externally expose network status information of a to-be-monitored service flow by using a transport layer. The processing unit is configured to determine a monitoring policy of the to-be-monitored service flow and a network status information exposure policy based on the indication information indicating to expose the network status information of the to-be-monitored service flow by using the transport layer, where the monitoring policy is for determining monitoring configuration information of the to-be-monitored service flow, the monitoring configuration information is for monitoring a network status of the to-be-monitored service flow, the network status information exposure policy is for determining a network status information exposure rule, and the network status information exposure rule is for determining a manner of exposing the network status information of the to-be-monitored service flow by using the transport layer. The transceiver unit is further configured to send the monitoring policy and the network status information exposure policy to a session management network element.

For example, the network status information exposure policy or the network status information exposure rule includes one or more of the following: indication information indicating to intervene in a transport layer capability negotiation procedure between a terminal device and an application server, indication information indicating a transport layer protocol used for the to-be-monitored service flow, a manner of receiving the network status information of the to-be-monitored service flow from an access network device, a manner of detecting a transport layer feedback message that is from the terminal device, a manner of adding information indicating the network status information of the to-be-monitored service flow to the transport layer feedback message, or indication information indicating to add a CE mark to at least one data packet based on the network status information of the to-be-monitored service flow, where the transport layer capability negotiation procedure includes a procedure of determining whether a capability of feeding back the network status information by using the transport layer is supported.

With reference to the seventh aspect, in some implementations of the seventh aspect, the transceiver unit is further configured to receive, from the application function network element, indication information indicating to intervene in the transport layer capability negotiation procedure between the terminal device and the application server.

With reference to the seventh aspect, in some implementations of the seventh aspect, the transceiver unit is further configured to receive, from the application function network element, the indication information that indicates the transport layer protocol used for the to-be-monitored service flow.

According to an eighth aspect, a communication apparatus is provided. The communication apparatus includes a transceiver unit. The transceiver unit is configured to receive a monitoring policy of a to-be-monitored service flow and a network status information exposure policy from a policy control function network element. The transceiver unit is further configured to send a network status information exposure rule to a user plane network element based on the network status information exposure policy, where the network status information exposure rule is for determining a manner of exposing the network status information of the to-be-monitored service flow by using a transport layer. The transceiver unit is further configured to send monitoring configuration information of the to-be-monitored service flow to an access network device based on the monitoring policy, where the monitoring configuration information is for monitoring a network status of the to-be-monitored service flow.

For example, the network status information exposure policy or the network status information exposure rule includes one or more of the following: indication information indicating to intervene in a transport layer capability negotiation procedure between a terminal device and an application server, indication information indicating a transport layer protocol used for the to-be-monitored service flow, a manner of receiving the network status information of the to-be-monitored service flow from an access network device, a manner of detecting a transport layer feedback message that is from the terminal device, a manner of adding information indicating the network status information of the to-be-monitored service flow to the transport layer feedback message, or indication information indicating to add a CE mark to at least one data packet based on the network status information of the to-be-monitored service flow, where the transport layer capability negotiation procedure includes a procedure of determining whether a capability of feeding back the network status information by using the transport layer is supported.

According to a ninth aspect, a communication apparatus is provided. The communication apparatus includes a transceiver unit. The transceiver unit is configured to send, to a policy control function network element, indication information indicating to externally expose network status information of a to-be-monitored service flow by using a transport layer. The transceiver unit is further configured to send at least one data packet in the to-be-monitored service flow. The transceiver unit is further configured to receive a second transport layer feedback message from a user plane network element, where the second transport layer feedback message corresponds to the at least one data packet, and the second transport layer feedback message includes information indicating the network status information of the to-be-monitored service flow.

For example, a transport layer protocol used for the to-be-monitored service flow is TCP, and the information indicating the network status information of the to-be-monitored service flow includes at least one of the following: a quantity of data packets carrying a CE mark, a quantity of payload octets of the data packets carrying the CE mark, a quantity of payload octets of data packets carrying an ECT1 mark, or a quantity of payload octets of data packets carrying an ECTO mark.

For another example, a transport layer protocol used for the to-be-monitored service flow is the QUIC protocol, and the information indicating the network information of the to-be-monitored service flow includes at least one of the following: a quantity of data packets carrying a CE mark, a quantity of data packets carrying an ECT1 mark, or a quantity of data packets carrying an ECTO mark.

For another example, a transport layer protocol used for the to-be-monitored service flow is RTP/RTCP, and the information for determining the network information of the to-be-monitored service flow includes one or more of the following: a quantity of data packets carrying an ECT 1 mark, a quantity of data packets carrying an ECTO mark, a quantity of data packets carrying a CE mark, a quantity of lost packets, a quantity of repeatedly received data packets, or a quantity of data packets carrying no ECN mark.

With reference to the ninth aspect, in some implementations of the ninth aspect, the transceiver unit is further configured to send, to the policy control function network element, indication information indicating to intervene in a transport layer capability negotiation procedure between the terminal device and the application server, where the transport layer capability negotiation procedure includes a procedure of determining whether a capability of feeding back the network status information by using the transport layer is supported.

With reference to the ninth aspect, in some implementations of the ninth aspect, the transceiver unit is further configured to send, to the policy control function network element, the indication information indicating the transport layer protocol used for the to-be-monitored service flow.

According to a tenth aspect, a communication apparatus is provided. The communication apparatus includes an obtaining unit and a transceiver unit. The obtaining unit is configured to obtain network status information of a to-be-monitored service flow. The transceiver unit is configured to send at least one data packet in the to-be-monitored service flow to a terminal device based on the network status information of the to-be-monitored service flow, where a ratio of a quantity of data packets carrying a CE mark in the at least one data packet to a quantity of the at least one data packet is for determining a network status of the to-be-monitored service flow.

In a possible implementation, the obtaining unit is the transceiver unit, and the transceiver unit is specifically configured to receive the network status information of the to-be-monitored service flow from an access network device.

In another possible implementation, the obtaining unit is a processing unit. The processing unit is specifically configured to monitor a network status of the to-be-monitored service flow based on the monitoring configuration information of the to-be-monitored service flow, to obtain the network status information of the to-be-monitored service flow.

With reference to the tenth aspect, in some implementations of the tenth aspect, the transceiver unit is further configured to receive a network status information exposure rule from a session management network element, where the network status information exposure rule is for determining a manner of exposing the network status information of the to-be-monitored service flow, and the network status information exposure rule includes one or more of the following: a manner of receiving the network status information of the to-be-monitored service flow from an access network device, or indication information indicating to add the CE mark to the at least one data packet based on the network status information of the to-be-monitored service flow.

According to an eleventh aspect, a communication apparatus is provided. The communication apparatus includes a processor. The processor is coupled to a memory, and may be configured to execute instructions in the memory, to implement the method according to any one of the first aspect and the possible implementations of the first aspect, or implement the method according to any one of the fifth aspect and the possible implementations of the fifth aspect. For example, the communication apparatus further includes the memory. For example, the communication apparatus further includes a communication interface, and the processor is coupled to the communication interface.

In an implementation, the communication apparatus is a user plane network element. When the communication apparatus is a user plane network element, the communication interface may be a transceiver or an input/output interface.

In another implementation, the communication apparatus is a chip disposed in a user plane network element. When the communication apparatus is a chip configured in a user plane network element, the communication interface may be an input/output interface.

For example, the transceiver may be a transceiver circuit. For example, the input/output interface may be an input/output circuit.

According to a twelfth aspect, a communication apparatus is provided. The communication apparatus includes a processor. The processor is coupled to a memory, and may be configured to execute instructions in the memory, to implement the method in any one of the second aspect and the possible implementations of the second aspect. For example, the communication apparatus further includes the memory. For example, the communication apparatus further includes a communication interface, and the processor is coupled to the communication interface.

In an implementation, the communication apparatus is a policy control function network element. When the communication apparatus is a policy control function network element, the communication interface may be a transceiver or an input/output interface.

In another implementation, the communication apparatus is a chip disposed in a policy control function network element. When the communication apparatus is a chip disposed in a policy control function network element, the communication interface may be an input/output interface.

For example, the transceiver may be a transceiver circuit. For example, the input/output interface may be an input/output circuit.

According to a thirteenth aspect, a communication apparatus is provided. The communication apparatus includes a processor. The processor is coupled to a memory, and may be configured to execute instructions in the memory, to implement the method in any one of the third aspect and the possible implementations of the third aspect. For example, the communication apparatus further includes the memory. For example, the communication apparatus further includes a communication interface, and the processor is coupled to the communication interface.

In an implementation, the communication apparatus is a session management network element. When the communication apparatus is a session management network element, the communication interface may be a transceiver or an input/output interface.

In another implementation, the communication apparatus is a chip disposed in a session management network element. When the communication apparatus is a chip disposed in a session management network element, the communication interface may be an input/output interface.

For example, the transceiver may be a transceiver circuit. For example, the input/output interface may be an input/output circuit.

According to a fourteenth aspect, a communication apparatus is provided. The communication apparatus includes a processor. The processor is coupled to a memory, and may be configured to execute instructions in the memory, to implement the method in any one of the fourth aspect and the possible implementations of the fourth aspect. For example, the communication apparatus further includes the memory. For example, the communication apparatus further includes a communication interface, and the processor is coupled to the communication interface.

In an implementation, the communication apparatus is an application server. When the communication apparatus is an application server, the communication interface may be a transceiver or an input/output interface.

In another implementation, the communication apparatus is a chip disposed in an application server. When the communication apparatus is a chip disposed in an application server, the communication interface may be an input/output interface.

For example, the transceiver may be a transceiver circuit. For example, the input/output interface may be an input/output circuit.

According to a fifteenth aspect, a processor is provided. The processor includes an input circuit, an output circuit, and a processing circuit. The processing circuit is configured to: receive a signal through the input circuit, and transmit a signal through the output circuit, to enable the processor to perform the method according to any one of the possible implementations of the first aspect to the fifth aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a sixteenth aspect, a processing apparatus is provided. The processing apparatus includes a processor and a memory. The processor is configured to: read instructions stored in the memory, receive a signal via a receiver, transmit a signal via a transmitter, and perform the method according to any one of the possible implementations of the first aspect to the fifth aspect.

For example, there are one or more processors, and there are one or more memories.

For example, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

It should be understood that a related data exchange process, for example, sending indication information, may be a process of outputting indication information from a processor, and receiving an uplink data packet may be a process of receiving an uplink data packet by a processor. Specifically, data output by the processor may be output to the transmitter, and input data received by the processor may be from the receiver. The transmitter and the receiver may be collectively referred to as a transceiver.

The processing apparatus according to the sixteenth aspect may be one or more chips. The processor in the processing apparatus may be implemented by hardware, or may be implemented by software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to a seventeenth aspect, a computer program product is provided. The computer program product includes a computer program (which may also be referred to as code or instructions). When the computer program is run, a computer is enabled to perform the method according to any one of the possible implementations of the first aspect to the fifth aspect.

According to an eighteenth aspect, a computer-readable storage medium is provided. The computer-readable storage medium stores a computer program (which may also be referred to as code or instructions). When the computer program is run on a computer, the method according to any one of the possible implementations of the first aspect to the fifth aspect is performed.

According to a nineteenth aspect, a communication system is provided, and includes the user plane network element and the application server that are described above.

Optionally, the communication system further includes the policy control network element and/or the session management network element that are described above.

### BRIEF DESCRIPTION OF DRAWINGS

FIG. 1 is a schematic diagram of a communication system to which a method according to an embodiment of this application is applicable;
FIG. 2 is a schematic flowchart of a communication method according to an embodiment of this application;
FIG. 3 is a schematic flowchart of a communication method according to an embodiment of this application;
FIG. 4 is a schematic diagram of a TCP header of a TCP acknowledgement (acknowledgement, ACK) and a schematic diagram of a header format;
FIG. 5 is a schematic diagram of a format of an IP header of a data packet;
FIG. 6 is a schematic flowchart of a communication method according to an embodiment of this application;
FIG. 7 is a schematic flowchart of a communication method according to an embodiment of this application;
FIG. 8 is a schematic diagram of a format of an RTCP feedback report;
FIG. 9 is a schematic flowchart of a communication method according to an embodiment of this application;
FIG. 10 is a schematic block diagram of a communication apparatus according to an embodiment of this application;
FIG. 11 is a schematic block diagram of a communication apparatus according to another embodiment of this application; and
FIG. 12 is a schematic diagram of a chip system according to an embodiment of this application.

### DESCRIPTION OF EMBODIMENTS

The following describes technical solutions of embodiments in this application with reference to the accompanying drawings.

The technical solutions in embodiments of this application may be applied to various communication systems, for example, a long term evolution (long term evolution, LTE) system, a frequency division duplex (frequency division duplex, FDD) system, a time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, a 6th generation (6th generation, 6G) system, or a future communication system. The 5G mobile communication system in this application includes a non-standalone (non-standalone, NSA) 5G mobile communication system and/or a standalone (standalone, SA) 5G mobile communication system. The communication system may alternatively be a public land mobile network (public land mobile network, PLMN), a device to device (device to device, D2D) communication system, a machine to machine (machine to machine, M2M) communication system, an internet of things (Internet of things, loT) communication system, a vehicle to everything (vehicle to everything, V2X) communication system, an unmanned aerial vehicle (uncrewed aerial vehicle, UAV) communication system, or another communication system.

The following describes the technical solutions in embodiments of this application with reference to the accompanying drawings in embodiments of this application. In the descriptions of this application, "/" represents an "or" relationship between associated objects unless otherwise specified. For example, A/B may represent A or B. The term "and/or" in this application indicates only an association relationship for describing associated objects and indicates that three relationships may exist. For example, A and/or B may indicate the following three cases: Only A exists, both A and B exist, and only B exists, where A and B may be singular or plural. In addition, in the descriptions of this application, "a plurality of" means two or more than two unless otherwise specified. At least one of the following items (pieces) or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the word such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a relative concept in a specific manner for ease of understanding.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

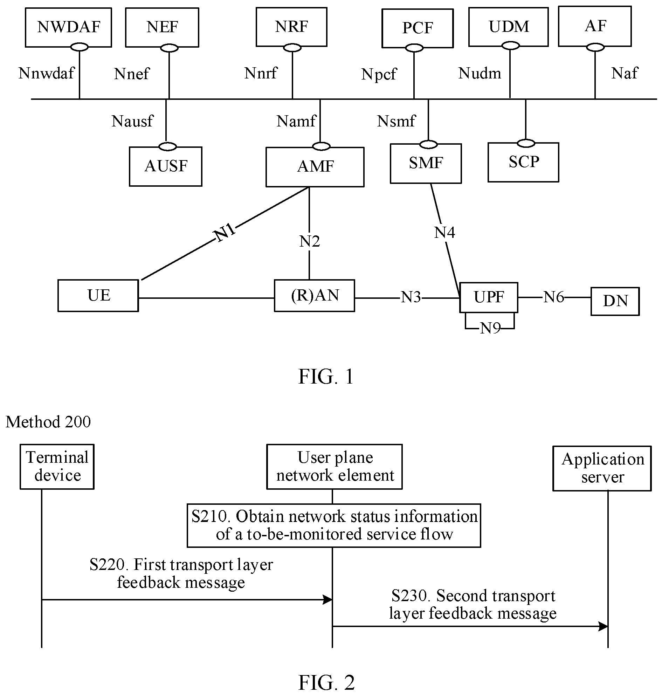

For ease of understanding of embodiments of this application, an application scenario of embodiments of this application is first described in detail with reference to FIG. 1.
1. User equipment (user equipment, UE) may be referred to as a terminal device, a terminal, an access terminal, a subscriber unit, a subscriber station, a mobile station, a mobile console, a remote station, a remote terminal, a mobile device, a user terminal, a wireless communication device, a user agent, or a user apparatus. Alternatively, the terminal device may be a cellular phone, a cordless phone, a session initiation protocol (session initiation protocol, SIP) phone, a wireless local loop (wireless local loop, WLL) station, a personal digital processor (personal digital assistant, PDA), a handheld device with a wireless communication function, a computing device, another processing device connected to a wireless modem, a vehicle-mounted device, an unmanned aerial vehicle, a wearable device, a terminal device in a 5G network, a terminal device in an evolved PLMN, or the like. This is not limited in embodiments of this application.
2. An access network (access network, AN) provides a network access function for an authorized user in a specific area, and can use transmission tunnels with different quality based on user levels, service requirements, and the like. Different access networks may use different access technologies. A current access network technology includes a radio access network technology used in a 3rd generation (3rd generation, 3G) system, a radio access network technology used in a 4th generation (4th generation, 4G) system, or a next-generation radio access network (next generation radio access network, NG-RAN) technology (for example, a radio access technology used in a 5G system).

An access network that implements a network access function based on a wireless communication technology may be referred to as a radio access network (radio access network, RAN). The radio access network can manage radio resources, provide an access service for a terminal, and further complete forwarding of a control signal and user data between a terminal and a core network.

A radio access network device may be, for example, a NodeB (NodeB), an evolved NodeB (evolved NodeB, eNB, or eNodeB), a next-generation node base station (next generation Node base station, gNB) in a 5G mobile communication system, a base station in a future mobile communication system, or an access point (access point, AP) in a Wi-Fi system, or may be a radio controller in a cloud radio access network (cloud radio access network, CRAN) scenario. Alternatively, the radio access network device may be a relay station, an access point, a vehicle-mounted device, an unmanned aerial vehicle, a wearable device, a network device in a 5G network, a network device in an evolved PLMN, or the like. A specific technology and a specific device form that are used by a radio access network device are not limited in embodiments of this application.

3. An access management network element is mainly configured to perform mobility management and access management, is responsible for transferring a user policy between user equipment and a policy control function (policy control function, PCF) network element, and the like, and may be configured to implement another function in a mobility management entity (mobility management entity, MME) function other than session management, for example, an access authorization (authentication) function.

In a 5G communication system, the access management network element may be an access and mobility management function (access and mobility management function, AMF) network element. In a future communication system, the access management network element may still be the AMF network element, or may have another name. This is not limited in this application.

4. A session management network element is mainly configured to perform session management, allocate and manage an internet protocol (Internet protocol, IP) address of user equipment, select a manageable user plane function, serve as a termination point of a policy control and charging function interface, perform downlink data communication, and the like.

In a 5G communication system, the session management network element may be a session management function (session management function, SMF) network element. In a future communication system, the session management network element may still be the SMF network element, or may have another name. This is not limited in this application.

5. A user plane network element is for packet routing and forwarding, quality of service (quality of service, QoS) processing of user plane data, user plane data forwarding completion, session/flow-level charging statistics, bandwidth restriction, and the like.

In a 5G communication system, the user plane network element may be a user plane function (user plane function, UPF) network element. In a future communication system, the user plane network element may still be the UPF network element, or may have another name. This is not limited in this application.

6. A data network element is a network configured to provide data transmission.

In a 5G communication system, the data network element may be a data network (data network, DN) network element. In a future communication system, the data network element may still be the DN network element, or may have another name. This is not limited in this application.

7. A policy control network element is configured to provide guidance on a unified policy framework for network behavior, provide policy rule information for a control plane function network element (for example, an AMF or SMF network element), and the like.

In a 4G communication system, the policy control network element may be a policy and charging rules function (policy and charging rules function, PCRF) network element. In a 5G communication system, the policy control network element may be a policy control function (policy control function, PCF) network element. In a future communication system, the policy control network element may still be the PCF network element, or may have another name. This is not limited in this application.

8. A data management network element is configured to process a user equipment identifier, access authentication, registration, mobility management, and the like.

In a 5G communication system, the data management network element may be a unified data management (unified data management, UDM) network element. In a 4G communication system, the data management network element may be a home subscriber server (home subscriber server, HSS) network element. In a future communication system, the data management network element may still be the UDM network element, or may have another name. This is not limited in this application.

9. A network exposure function (network exposure function, NEF) network element is configured to securely expose, , a service, a capability, and the like that are provided by a 3rd generation partnership project (3rd generation partnership project, 3GPP) network function.

10. An application function (application function, AF) network element provides a specific application layer service for UE. When providing a service for the UE, the AF has requirements on a QoS policy and a charging (charging) policy and needs to notify a network. In addition, the AF also needs to obtain application-related information fed back by a core network. The AF may have all functions of the AF defined in technical specification (technological specification, TS) 23.501 R-15, and have related functions for application services. In other words, in a user plane architecture, the application server (application server, AS) and the UE perform user plane communication through a UE-RAN-UPF-AF path. In a control plane architecture, the AF may further communicate with another network function (network function, NF) in a 5G core network (5G core network, 5GC) via the NEF, for example, communicate with the PCF through the NEF. If the AF is deployed by a 5GC operator, the AF may further directly communicate with another NF in the 5GC in the control plane architecture without using the NEF, for example, directly communicate with the PCF.
11. A network data analysis function (network data analysis function, NWDAF) network element may be configured to: collect data from another network element, an AF, and an operation administration and maintenance (operation administration and maintenance, OAM) system, analyze data using solutions such as machine learning and artificial intelligence, and provide a result to the another network element, the AF, and the like for network or service configuration optimization, to provide better network quality and service experience.
12. A network repository function (network repository function, NRF) network element may be configured to provide a network element discovery function, and provide, based on a request of another network element, network element information corresponding to a network element type. The NRF network element further provides network element management services, such as network element registration, update, and deregistration, and network element status subscription and push.
13. An authentication server function (authentication server function, AUSF) network element is mainly responsible for authenticating a user to determine whether to allow the user or a device to access a network.
14. A service communication proxy (service communication proxy, SCP) network element may be for indirect communication of NFs, and service requests of NFs may be processed by the SCP as an agent.

In FIG. 1, N1, N2, N3, N4, N6, N9, Nnwdaf, Nnef, Nnrf, Npcf, Nudm, Naf, Nausf, Namf, and Nsmf are interface sequence numbers. For meanings of these interface sequence numbers, refer to 3GPP technical standard (technical standard, TS) 23.501.

It should be understood that the foregoing network architecture applied to embodiments of this application is merely an example for description, and a network architecture applicable to embodiments of this application is not limited thereto. Any network architecture that can implement the functions of the foregoing network elements is applicable to embodiments of this application.

It should be further understood that the AMF, the SMF, the UPF, the NEF, the PCF, the UDM, the NWDAF, the NRF, the AUSF, the SCP, and the like shown in FIG. 1 may be understood as network elements configured to implement different functions in a core network, for example, may be combined into a network slice as required. These core network elements may be independent devices, or may be integrated into a same device to implement different functions. Specific forms of the foregoing network elements are not limited in this application.

It should be further understood that the foregoing names are defined merely for distinguishing between different functions, and should not constitute any limitation on this application. This application does not exclude a possibility of using other names in the 5G network and another future network. For example, in a 6G network, some or all of the network elements may still use terms in 5G, or may use other names. Names of interfaces between the network elements in FIG. 1 are merely examples, and the interfaces may have other names during specific implementation. This is not specifically limited in this application. In addition, names of messages (or signaling) transmitted between the network elements are merely examples, and do not constitute any limitation on functions of the messages.

If a third-party application can obtain a network status in real time, a third-party application can perform adjustment accordingly based on the network status to ensure service experience of a user and maximize network utilization. Therefore, how to quickly expose more network status information, such as available bandwidth and congestion statuses, to third-party applications is a key issue. The third-party application refers to an application provided by a manufacturer other than a manufacturer of a terminal device or a home operator.

In an implementation, a RAN may monitor a network congestion status, and expose network status information by adding an explicit congestion notification (explicit congestion notification, ECN) mark to an IP header of a downlink data packet. Specifically, the RAN adds the ECN mark (ECN mark, or ECN label) to the IP header of the downlink data packet, and sends the downlink data packet to UE. Then, the UE collects statistics on a quantity of downlink data packets carrying the ECN mark and/or a quantity of payload octets of the downlink data packets carrying the ECN mark in at least one received downlink data packet, and sends a statistical result to an application server side by using a transport layer feedback mechanism, so that a third-party application can obtain a network status.

However, in the foregoing implementation, if the UE does not support sending of the statistical result to the application server side by using the transport layer feedback mechanism, the third-party application cannot quickly obtain the network status. In addition, because the RAN is closer to a user side than a core network element, and there is a possibility that the RAN is physically damaged, there is a security risk to some extent that the RAN parses an IP layer of the downlink data packet and adds the ECN mark to the IP header of the downlink data packet.

In view of this, embodiments of this application provide a communication method, to optimize a manner of feeding back network status information to an application server by using a transport layer.

It should be noted that, in embodiments of this application, a service flow that is from a terminal device or an access network device and whose destination address is the application server is referred to as an uplink service flow, and a service flow that is from the application server and whose destination address is the terminal device is referred to as a downlink service flow. The application server provides an application service corresponding to an uplink service flow and/or a downlink service flow for the terminal device.

It should be further noted that a transport layer in embodiments of this application is for providing end-to-end transmission of media or application content, to ensure reliable transmission of the media content. For example, the transport layer may include transport layer protocols such as the transmission control protocol (transport control protocol, TCP), the user datagram protocol (user datagram protocol, UDP), the quick UDP internet connection (quick UDP Internet connection, QUIC) protocol, the real-time transport protocol (real-time transport protocol, RTP), and the real-time transport control protocol (real-time transport control protocol, RTCP).

FIG. 2 is a schematic flowchart of a communication method 200 according to an embodiment of this application. The following describes in detail steps included in the method 200.

S210. A user plane network element obtains network status information of a to-be-monitored service flow.

The network status information of the to-be-monitored service flow includes one or more of the following: a transmission delay of a data packet in the to-be-monitored service flow, a sending queue length of the to-be-monitored service flow, congestion information of the to-be-monitored service flow, a packet loss rate of the to-be-monitored service flow, or available bandwidth of the to-be-monitored service flow.

The congestion information of the to-be-monitored service flow is for determining whether congestion occurs on the to-be-monitored service flow and/or a congestion degree of the to-be-monitored service flow. The congestion information of the to-be-monitored service flow may include one or more of the following: the transmission delay of the data packet in the to-be-monitored service flow, a transmission delay threshold, the sending queue length of the to-be-monitored service flow, a sending queue length threshold, the packet loss rate of the to-be-monitored service flow, a packet loss rate threshold, the available bandwidth of the to-be-monitored service flow, or an available bandwidth threshold.

The transmission delay of the data packet in the to-be-monitored service flow and the transmission delay threshold may be for determining whether congestion occurs on the to-be-monitored service flow. For example, if the transmission delay of the data packet in the to-be-monitored service flow is greater than or equal to the transmission delay threshold, congestion occurs on the to-be-monitored service flow; or if the transmission delay of the data packet in the to-be-monitored service flow is less than the transmission delay threshold, congestion does not occur on the to-be-monitored service flow. Alternatively, the transmission delay of the data packet in the to-be-monitored service flow and the transmission delay threshold may be for determining the congestion degree of the to-be-monitored service flow. For example, if a ratio of the transmission delay of the data packet in the to-be-monitored service flow to the transmission delay threshold is 60%, the congestion degree of the to-be-monitored service flow is 60%.

Similarly, the sending queue length of the to-be-monitored service flow and the sending queue length threshold may be for determining whether congestion occurs on the to-be-monitored service flow, or for determining the congestion degree of the to-be-monitored service flow. The packet loss rate of the to-be-monitored service flow and the packet loss rate threshold may be for determining whether congestion occurs on the to-be-monitored service flow, or for determining the congestion degree of the to-be-monitored service flow. The available bandwidth of the to-be-monitored service flow and the available bandwidth threshold may be for determining whether congestion occurs on the to-be-monitored service flow, or for determining the congestion degree of the to-be-monitored service flow.

A manner in which the user plane network element obtains the network status information of the to-be-monitored service flow is not limited in this embodiment of this application.

In a possible implementation, the user plane network element receives the network status information of the to-be-monitored service flow from an access network device. For example, the user plane network element receives an uplink data packet from the access network device, where a general packet radio system (general packet radio system, GPRS) tunneling protocol-user plane (GPRS tunneling protocol user plane, GTP-U) header of the uplink data packet includes the network status information of the to-be-monitored service flow. For another example, the user plane network element receives the network status information of the to-be-monitored service flow from the access network device via a session management network element. To be specific, the session management network element receives the network status information of the to-be-monitored service flow from the access network device, and then the session management network element sends the network status information of the to-be-monitored service flow to the user plane network element.

In this implementation, content included in the network status information of the to-be-monitored service flow that is sent by the access network device is related to the monitoring configuration information received by the access network device. The monitoring configuration information is for monitoring a network status of a to-be-monitored service flow, and the monitoring configuration information includes a monitoring parameter and an identifier of the to-be-monitored service flow or a GTP-U tunnel identifier.

The monitoring parameter may include one or more of the following: a transmission delay, a packet loss rate, a congestion degree, a length of a data sending queue, or available bandwidth. For example, if the monitoring parameter includes a transmission delay, the network status information of the to-be-monitored service flow that is sent by the access network device may include the transmission delay of the data packet in the to-be-monitored service flow. For another example, if the monitoring parameter includes a congestion degree, the network status information of the to-be-monitored service flow that is sent by the access network device includes the congestion information of the to-be-monitored service flow.

The identifier of the to-be-monitored service flow is for identifying the to-be-monitored service flow. For example, the identifier of the to-be-monitored service flow includes one or more of the following: a data connection session identifier (for example, a protocol data unit (protocol data unit, PDU) session identifier, an IP connectivity access network (IP-connectivity access network, IP-CAN) session identifier, or another session identifier, where for ease of description, a PDU session is used as an example for description in subsequent embodiments), service flow description information, an application identifier, a QoS flow identifier (QoS flow identifier, QFI), a service type identifier, or an application type identifier.

The PDU session identifier is session identifier information of a PDU session carrying the to-be-monitored service flow. For example, if the PDU session carries only the to-be-monitored service flow, the identifier of the to-be-monitored service flow may be the PDU session identifier.

The service flow description information is for determining the to-be-monitored service flow. The service flow description information may be at least one of IP data packet filtering sets such as IP 5-tuple description information, IP triplet information, a domain name, or an uplink/downlink of the to-be-monitored service flow. The IP 5-tuple description information of the to-be-monitored service flow may be: a source IP address (source IP address), a destination IP address (destination IP address), a source port number (source port number), a destination port number (destination port number), and a protocol type. The IP triplet information of the to-be-monitored service flow may be: a destination IP address, a destination port number, and a protocol type. Alternatively, the service flow description information may be at least one piece of information in ethernet (ethernet) packet header information, for example, a source media access control (media access control, MAC) address, a destination MAC address, or a virtual local area network (virtual local area network, VLAN) identifier. The service flow description information may further include an application identifier (application identifier). For example, the service flow description information may be referred to as service data flow (service data flow, SDF) description information. For the SDF description information, refer to the IP data packet filter set. For descriptions of the IP data packet filter set, refer to descriptions in 3GPP TS 23.501.

The application identifier is for identifying an application corresponding to the to-be-monitored service flow. If the application has only the to-be-monitored service flow, the identifier of the to-be-monitored service flow may be the application identifier.

The QFI is for identifying a QoS flow, and the to-be-monitored service flow is transmitted in the QoS flow. For example, if the QoS flow corresponds to only the to-be-monitored service flow, that is, only the to-be-monitored service flow is transmitted in the QoS flow, the identifier of the to-be-monitored service flow may be the QFI.

The service type identifier may be an identifier of a type of the to-be-monitored service flow. For example, the type of the to-be-monitored service flow may be a video service, a voice service, a game service, a web page browsing service, or the like.

The application type identifier may be an identifier of a type of an application corresponding to the to-be-monitored service flow.

Optionally, the monitoring configuration information of the to-be-monitored service flow further includes a trigger condition for reporting the network status information of the to-be-monitored service flow. For example, if the monitoring configuration information of the to-be-monitored service flow includes a transmission delay threshold, when the transmission delay of the data packet in the target to-be-monitored service flow exceeds the transmission delay threshold, reporting of the network status information of the to-be-monitored service flow is triggered.

Optionally, the monitoring configuration information of the to-be-monitored service flow further includes a reporting periodicity for reporting the network status information of the to-be-monitored service flow. Correspondingly, the access network device periodically sends the network status information of the to-be-monitored service flow based on the reporting periodicity.

Optionally, the monitoring configuration information of the to-be-monitored service flow further includes a reporting target network element identifier and/or a manner of reporting the network status information. The reporting target network element identifier is an identifier of a target network element to which the access network device reports the network status information of the to-be-monitored service flow. For example, the reporting target network element identifier is an identifier of a user plane network element or an identifier of a session management network element. The manner of reporting the network status information includes a user plane manner or a control plane manner. The user plane manner means that the access network device reports the network status information of the to-be-monitored service flow to the user plane network element. For example, the user plane manner further includes reporting the network status information by using a GTP-U layer of an uplink data packet. To be specific, the access network device adds the network status information of the to-be-monitored service flow to a GTP-U header of the uplink data packet and sends the GTP-U header to the user plane network element. The control plane manner means that the access network device reports the network status information of the to-be-monitored service flow to a control plane network element (for example, the session management network element).

In another possible implementation, the user plane network element obtains the network status information of the to-be-monitored service flow by monitoring a network status of the to-be-monitored service flow. The user plane network element monitors the network status of the to-be-monitored service flow based on received monitoring configuration information. For example, if a monitoring parameter includes a transmission delay, the user plane network element monitors a transmission delay of the data packet in the to-be-monitored service flow between an access network device and the user plane network element, to obtain the transmission delay of the data packet in the to-be-monitored service flow. For another example, if a monitoring parameter includes a packet loss rate, the user plane network element monitors a packet loss status of the data packet in the to-be-monitored service flow to obtain the packet loss rate of the to-be-monitored service flow.

S220. The user plane network element receives a first transport layer feedback message from a terminal device. Correspondingly, in S220, the terminal device sends the first transport layer feedback message to the user plane network element.

The first transport layer feedback message corresponds to at least one data packet in the to-be-monitored service flow. In other words, the first transport layer feedback message is a feedback message for the at least one data packet in the to-be-monitored service. The first transport layer feedback message may be received at a moment when the user plane network element obtains the network status information of the to-be-monitored service flow, or may be received after the user plane network element obtains the network status information of the to-be-monitored service flow.

A manner in which the terminal device sends the first transport layer feedback message to the user plane network element is not limited in this embodiment of this application. For example, if the to-be-monitored service flow includes both an uplink data flow and a downlink data flow, the terminal device may send the first transport layer feedback message to the user plane network element by using the uplink data flow in the to-be-monitored service flow, that is, the first transport layer feedback message belongs to the to-be-monitored service flow. For another example, if the to-be-monitored service flow has only a downlink data flow, the terminal device may send the first transport layer feedback message to the user plane network element by using an uplink service flow, that is, the first transport layer feedback message corresponds to the to-be-monitored service flow, and the uplink service flow and the to-be-monitored service flow correspond to a same service.

A form of the first transport layer feedback message is not limited in this embodiment of this application.

For example, if a transport layer protocol used for the to-be-monitored service flow is TCP, the first transport layer feedback message may be a TCP acknowledgement (acknowledgement, ACK). For more descriptions of the TCP ACK, refer to the following method 300.

For another example, if the QUIC protocol is used for the to-be-monitored service flow, the first transport layer feedback message may be a QUIC ACK. For more descriptions of the QUC ACK, refer to the following method 600.

For another example, if RTP or RTCP is used for the to-be-monitored service flow, the first transport layer feedback message is an RTCP feedback report. For more descriptions of the RTCP report, refer to the following method 700.

S230. The user plane network element sends a second transport layer feedback message to an application server.

In an implementation, that the user plane network element sends the second transport layer feedback message to the application server based on the first transport layer feedback message includes: The user plane network element generates, based on the network status information of the to-be-monitored service flow, information indicating the network status; the user plane network element generates the second transport layer feedback message by adding, to the first transport layer feedback message, the information indicating the network status of the to-be-monitored service flow; and the user plane network element sends the second transport layer feedback message to the application server.

In a possible implementation, that the user plane network element sends the second transport layer feedback message to the application server based on the first transport layer feedback message includes: The user plane network element generates, based on the network status information of the to-be-monitored service flow, information indicating the network status; the user plane network element generates the second transport layer feedback message by modifying some fields in the first transport layer feedback message; and the user plane network element sends the second transport layer feedback message to the application server.

For more descriptions of sending the second transport layer feedback message by the user plane network element to the application server, refer to the following descriptions in the method 300, the method 600, and the method 700.

The network status indicated by the information indicating the network status is the same as a network status indicated by the network status information of the to-be-monitored service flow, or the information indicating the network status may be the same as the network status information of the to-be-monitored service flow. For example, the network status information of the to-be-monitored service flow includes the available bandwidth threshold and the available bandwidth of the to-be-monitored service flow. If a ratio of the available bandwidth of the to-be-monitored service flow to the available bandwidth threshold is 60%, it indicates that the congestion degree of the to-be-monitored service flow is 60%. Further, the information that is included in the second transport layer feedback message sent by the user plane network element to the application server and that indicates the network status indicates that the congestion degree of the to-be-monitored service flow is 60%.

In a possible implementation, that the user plane network element generates, based on the network status information of the to-be-monitored service flow, information indicating the network status includes: The user plane network element generates, based on the network status information of the to-be-monitored service flow and an ECN mark of the at least one data packet, the information indicating the network status.

For a manner in which the user plane network element generates the information indicating the network status, refer to the following descriptions in S314 in the method 300, S616 in the method 600, and S715 in the method 700.

A manner in which the user plane network element obtains the ECN mark of the at least one data packet is not limited in this embodiment of this application.

For example, that the user plane network element obtains the ECN mark of the at least one data packet includes: The user plane network element receives the at least one data packet from the application server; and the user plane network element determines the ECN mark of the at least one data packet. In other words, the user plane network element determines the ECN mark of the at least one data packet by parsing an IP layer of the at least one data packet. Further, the user plane network element may store the ECN mark of the at least one data packet.

For another example, that the user plane network element obtains the ECN mark of the at least one data packet includes: The user plane network element obtains the ECN mark of the at least one data packet from the first transport layer feedback message. For more descriptions of obtaining, by the user plane network element, the ECN mark of the at least one data packet from the first transport layer feedback message, refer to the following descriptions in the method 300, the method 600, and the method 700.

A trigger condition for generating, by the user plane network element, the information indicating the network status is not limited in this embodiment of this application.

In a possible implementation, the trigger condition for generating, by the user plane network element, the information indicating the network status includes: the network status information of the to-be-monitored service flow and the first transport layer feedback message, to be specific, when obtaining the network status information of the to-be-monitored service flow and the first transport layer feedback message, the user plane network element generates the information indicating the network status.

In another possible implementation, the trigger condition for generating, by the user plane network element, the information indicating the network status includes: The user plane network element determines that the application server supports a capability of exposing the network status information by using a transport layer. To be specific, when determining that the application server supports the capability of exposing the network status information by using the transport layer, the user plane network element generates the information indicating the network status. For a manner in which the user plane network element determines that the application server supports the capability of exposing the network status information by using the transport layer, refer to the following descriptions in the method 300, the method 600, and the method 700.

In yet another possible implementation, the trigger condition for generating, by the user plane network element, the information indicating the network status includes: The user plane network element receives a network status information exposure rule. To be specific, when receiving the network status information exposure rule, the user plane network element generates, based on the network status information exposure rule, the information indicating the network status.

The network status information exposure rule is for determining a manner of exposing the network status information of the to-be-monitored service flow by using the transport layer. For example, the network status information exposure rule includes one or more of the following: indication information indicating to intervene in a transport layer capability negotiation procedure between the terminal device and the application server, indication information indicating an exposure rule, a manner of receiving the network status information of the to-be-monitored service flow from the access network device, a manner of detecting the first transport layer feedback message that is from the terminal device, a manner of adding the information indicating the network status information of the to-be-monitored service flow to the first transport layer feedback message, or indication information indicating to add a congestion experienced (congestion experienced, CE) mark to the at least one data packet based on the network status information of the to-be-monitored service flow.

The transport layer capability negotiation procedure includes a procedure of determining whether the capability of exposing the network status information by using the transport layer is supported. The indication information indicating to intervene in the transport layer capability negotiation procedure between the terminal device and the application server indicates whether to intervene in transport layer capability negotiation between the terminal device and the application server, or indicates the user plane network element to monitor whether the terminal device or the application server supports feedback of the network status information of the to-be-monitored service flow by using the transport layer. Optionally, if the terminal device does not support or the application server supports feedback if the network status information of the to-be-monitored service flow by using the transport layer, the user plane network element performs capability negotiation with the application server in place of the terminal device. The indication information indicating the exposure rule indicates that the network status information of the to-be-monitored service flow is to be externally exposed by using the transport layer. The supporting exposure/feedback of the network status information by using the transport layer means that the terminal device and/or the application server support/supports feedback of the network congestion status by using a protocol such as accurate TCP, QUIC, or RTP/RTCP. The manner of receiving the network status information of the to-be-monitored service flow from the access network device is a manner of obtaining the network status information of the to-be-monitored service flow that is reported by the access network device, for example, obtaining the network status information of the to-be-monitored service flow from the GTP-U header of the uplink data packet that is from the access network device, or obtaining the network status information of the to-be-monitored service flow from the session management network element, where the session management network element receives the network status information of the to-be-monitored service flow from the access network device. The manner of detecting the first transport layer feedback message that is from the terminal device indicates, to the user plane network element, how to determine that the data is the first transport layer feedback message of the terminal device. For example, for the TCP protocol, the user plane network element identifies an ACK bit in a TCP header of the data, to determine that the data is a corresponding TCP feedback message. The manner of adding the information indicating the network status of the to-be-monitored service flow to the first transport layer feedback message indicates the user plane network element to obtain the ECN mark in the at least one data packet for different transport protocols and accordingly generate the second transport layer message. For more descriptions of the network status information exposure rule, refer to the following descriptions in the method 300, the method 600, and the method 700.

Optionally, before the user plane network element generates, based on the network status information of the to-be-monitored service flow, the information indicating the network status, the method 200 further includes: The user plane network element assists the terminal device and the application server in performing the transport layer capability negotiation procedure, in other words, the user plane network element intervenes in the transport layer capability negotiation procedure between the terminal device and the application server.

That the user plane network element assists the terminal device and the application server in performing transport layer capability negotiation includes: The user plane network element receives a first transport layer data packet from the terminal device, where the first transport layer data packet corresponds to the to-be-monitored service flow; and the user plane network element sends a second transport layer data packet to the application server based on the first transport layer data packet, where the second transport layer data packet includes indication information indicating that exposure of the network status information by using the transport layer is supported. For example, that the first transport layer data packet corresponds to the to-be-monitored service flow includes the following cases: The first transport layer data packet is for establishing the to-be-monitored service flow, the first transport layer data packet is a feedback message for the at least one packet in the to-be-monitored service flow, or the first transport layer data packet is for negotiating a service parameter of a service carried in the to-be-monitored service flow.

Optionally, before the user plane network element sends the second transport layer data packet to the application server based on the first transport layer data packet, the method 200 further includes: The user plane network element determines that the first transport layer data packet includes indication information indicating that exposure of the network status information by using the transport layer is not supported.

For example, if the transport layer protocol used for the to-be-monitored service flow is TCP, the first transport layer data packet and the second transport layer data packet are TCP connection establishment messages. For another example, if the transport layer protocol used for the to-be-monitored service flow is RTP or RTCP, the first transport layer data packet and the second transport layer data packet are uplink session description protocols. For more descriptions of the first transport layer data packet and the second transport layer data packet, refer to the following descriptions in the method 300, the method 600, and the method 700.

In this embodiment of this application, if the user plane network element obtains the network status information of the to-be-monitored service flow, the user plane network element generates, based on the network status information of the to-be-monitored service flow, the information indicating the network status of the to-be-monitored service flow. Further, after receiving the first transport layer feedback message from the terminal device, the user plane network element sends the second transport layer feedback message to the application server based on the first transport layer feedback message, where the second transport layer feedback message includes the information indicating the network status of the to-be-monitored service flow, so that the application server can determine the network status of the to-be-monitored service flow based on the second transport layer feedback message. In this way, the application server can adjust a service parameter of the to-be-monitored service flow based on the network status of the to-be-monitored service flow, for example, dynamically adjust a media bit rate, to ensure service experience of a user and improve effective utilization of network resources.

In addition, according to the method provided in this embodiment of this application, an access network device may send the network status information of the to-be-monitored service flow to the user plane network element, and then the user plane network element exposes the network status information to the application server by using a transport layer. Compared with a manner in which the access network device exposes the network status information by adding an ECN mark to an IP header of a downlink data packet, this application provides higher security because the access network device does not need to parse the IP header of the downlink data packet. In addition, the network status information does not need to be sent to the terminal device, and then is sent by the terminal device to an application server side. In this way, the network status information can be fed back more quickly.

In addition, the second transport layer feedback message sent by the user plane network element to the application server includes the information indicating the network status. Therefore, according to the method provided in this embodiment of this application, the network status information of the to-be-monitored service flow can be exposed to the application server by using the transport layer without considering a capability of the terminal device. This avoids the following problem: When the terminal device does not support a capability of exposing the network status information by using the transport layer, the network status information of the to-be-monitored service flow cannot be exposed to the application server, and therefore an application cannot perform dynamic adjustment, thereby affecting user experience.

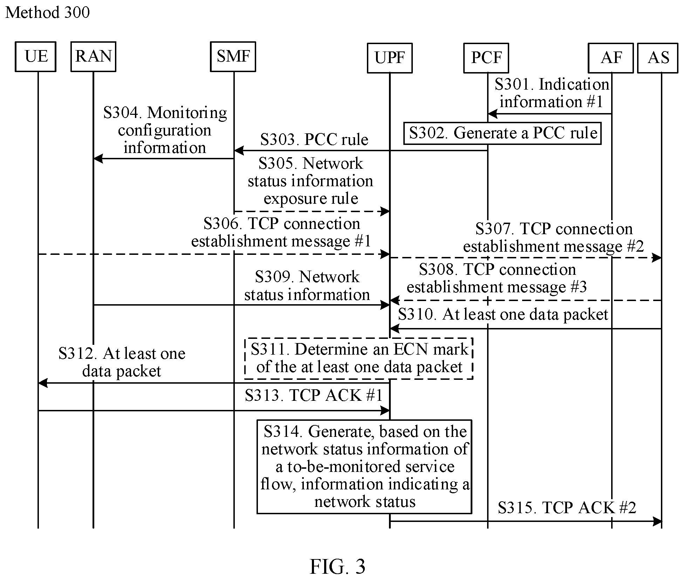

FIG. 3 is a schematic flowchart of a communication method according to an embodiment of this application. Specifically, in FIG. 3, an example in which a transport layer protocol used for a to-be-monitored service flow is TCP is used to describe how to expose network status information of the to-be-monitored service flow by using a transport layer according to the method provided in this embodiment of this application.

As described in S230 in the method 200, there are three trigger conditions under which the user plane network element (denoted as a UPF below) generates, based on the network status information of the to-be-monitored service flow, the information indicating the network status. When the UPF generates, based on different trigger conditions, the information indicating the network status, the method 300 includes different steps.

In a possible implementation, if the UPF generates, when obtaining the network status information of the to-be-monitored service flow and the first transport layer feedback message, the information indicating the network status, the method 300 may include S301 to S304, S309, 5310, and S312 to S315.

In another possible implementation, if the UPF generates, when receiving the network status information exposure rule, the information indicating the network status, the method 300 may include S301 to S305, S309, 5310, and S312 to S315.

In still another possible implementation, if the UPF generates, when determining that the application server (denoted as an AS below) supports the capability of exposing the network status information by using the transport layer, the information indicating the network status, the method 300 may include S301 to S304, 5308 to S310, and S312 to S315.

Optionally, the method 300 further includes S306 and 5307. Optionally, the method 300 further includes S311.

The following describes in detail steps included in the method 300.

S301. An application function network element (denoted as an AF below) sends indication information #1 to a policy control function network element (denoted as a PCF below). Correspondingly, the PCF receives the indication information #1 from the AF.

The indication information #1 is indication information indicating to expose the network status information of the to-be-monitored service flow by using the transport layer. For example, the indication information #1 may be named low latency, low loss, and scalable throughput (low latency, low loss, scalable throughput, L4S) indication information.

The indication information #1 may be one or more of the following examples.

For example, the indication information #1 is service flow description information. For the service flow description information, refer to the descriptions of S210.

For another example, the indication information #1 is 1-bit information.

For another example, the indication information #1 is an event identifier. The event identifier corresponds to the event of "exposing the network status information of the to-be-monitored service flow by using the transport layer".

A manner in which the AF sends the indication information #1 to the PCF is not limited in this embodiment of this application. For example, the AF may send the indication information #1 to the PCF by using an application function request (AF request) message. To be specific, the AF sends the AF request message to the PCF, where the AF request message includes the indication information #1. For example, the AF request message may be an Npcf_PolicyAuthorization (Npcf_PolicyAuthorization) service.

For example, the AF directly sends the indication information #1 to the PCF, or the AF first sends the indication information #1 to a network exposure function network element (network exposure function, NEF), and then the NEF forwards the indication information #1 to the PCF. For example, the AF may send the indication information #1 to the NEF by using an Nnef_AFSessionWithQoS (Nnef_AFSessionWithQoS) service, and then the NEF sends the indication information #1 to the PCF by invoking the Npcf_PolicyAuthorization service.

Optionally, if the AF does not send the service flow description information to the PCF, and the indication information #1 is not the service flow description information, in S301, the AF sends the service flow description information and the indication information #1 to the PCF. For example, the AF sends an AF request message to the PCF, where the AF request message includes the service flow description information and the indication information #1.

Optionally, in S301, the AF further sends indication information #2 to the PCF, where the indication information #2 is indication information indicating to intervene in a transport layer capability negotiation procedure between a terminal device (denoted as UE below) and the AS. For more descriptions of the indication information #2, refer to S230 in the method 200. The transport layer capability negotiation procedure between the UE and the AS is a procedure in which the UE determines whether the AS supports the capability of exposing the network status information by using the transport layer and the AS determines whether the UE supports the capability of exposing the network status information by using the transport layer. For example, when the transport layer protocol used for the to-be-monitored service flow is TCP, a manner of exposing the network status information by using the transport layer includes an L4S manner. Therefore, the indication information #2 may indicate to intervene in an L4S capability negotiation procedure between the UE and the AS.

Optionally, in S301, the AF further sends indication information #3 to the PCF, where the indication information #3 is indication information indicating an exposure rule. Specifically, the indication information #3 indicates a rule of externally exposing, by a core network, the network status information by using the transport layer. For example, when the transport layer protocol used for the to-be-monitored service flow is TCP, the exposure rule indicated by the indication information #3 includes: The core network performs L4S feedback by using TCP. Alternatively, the indication information #3 indicates the transport layer protocol used for the to-be-monitored service flow.

S302. The PCF generates a policy control and charging (policy control and charging, PCC) rule.

The PCC rule includes a monitoring policy of the to-be-monitored service flow. The monitoring policy of the to-be-monitored service flow is for determining monitoring configuration information of the to-be-monitored service flow. For the monitoring configuration information, refer to the descriptions of S210. The monitoring policy includes a monitoring parameter and an identifier of the to-be-monitored service flow. Optionally, the monitoring policy further includes a trigger condition for reporting the network status information of the to-be-monitored service flow. Optionally, the monitoring policy further includes a reporting periodicity of the network status information of the to-be-monitored service flow. Optionally, the monitoring policy further includes a reporting target network element identifier and/or a manner of reporting the network status information. For more descriptions of the monitoring policy, refer to the descriptions of the monitoring configuration information in S210.

Optionally, the PCC rule further includes a network status information exposure policy, and the network status information exposure policy includes one or more of the following: the indication information #2, the indication information #3, a manner of receiving the network status information of the to-be-monitored service flow from a RAN, a manner of detecting the first transport layer feedback message that is from the UE, or a manner of adding the information indicating the network status to the first transport layer feedback message.

The manner of receiving the network status information of the to-be-monitored service flow from the RAN includes: receiving the network status information of the to-be-monitored service flow from the RAN side by using a GTP-U header of an uplink data packet, or receiving the network status information of the to-be-monitored service flow from the RAN side via a session management network element (denoted as an SMF below).

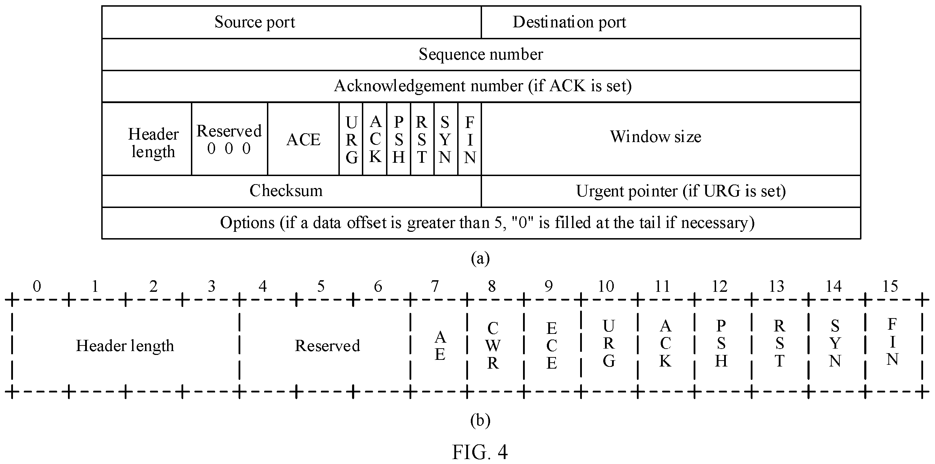

When the transport layer protocol used for the to-be-monitored service flow is TCP, the first transport layer feedback message is a TCP ACK. FIG. 4 is a schematic diagram of a TCP header of the TCP ACK. As shown in (a) in FIG. 4, the TCP header of the TCP ACK includes the following fields: a source port, a destination port, a sequence number (sequence number), an acknowledgement number (acknowledgement number), a header length (header length), a reserved (reserved) field, an accurate ECN (accurate ECN, ACE) field, an urgent (urgent, URG) flag, an ACK flag, a push (push, PSH) flag, a reset (reset, RST) flag, a synchronize (synchronize, SYN) flag, a finish (finish, FIN) flag, a window size (window size), checksum (checksum), urgent pointer (urgent pointer), and options (options). The ACE field is composed of three bits: accurate ECN (accurate ECN, AE), congestion window reduced (congestion window reduced, CWR), and ECN echo (ECN echo, ECE). The SYN flag and ACK flag in the TCP header of the TCP connection establishment request are set to "1".

According to the schematic diagram of the TCP header of the TCP ACK shown in (a) in FIG. 4, a manner of detecting the first transport layer feedback message that is from the UE includes: If an ACK flag in a TCP header of a packet from the UE is set to "1", the packet is the TCP ACK, that is, the packet is the first transport layer feedback message.

Further, a manner of adding the information indicating the network status to the first transport layer feedback message includes: Values of some fields in the TCP ACK are modified, or values are assigned to some fields in the TCP ACK, so that some fields in the TCP ACK indicate the network status of the to-be-monitored service flow. The some fields in the TCP ACK include one or more of the following: a parameter r.cep in the ACE field in the TCP header of the TCP ACK, and a parameter r.ceb, a parameter r.e0b, or a parameter r.e 1b in the options field in the TCP header of the TCP ACK. r.cep represents a quantity of data packets carrying a CE mark, r.ceb represents a quantity of payload octets of data packets carrying an explicit congestion notification capable transport (ECN capable transport, ECT) 0 mark, r.e0b represents a quantity of payload octets of data packets carrying an ECT1 mark, and r.e1b represents a quantity of payload octets of the data packets carrying the CE mark.

It should be noted that in S302, the PCF generates the PCC rule based on indication information (to be specific, one or more of the indication information #1, the indication information #2, and the indication information #3) that is from the AF, to be specific, the PCF generates the monitoring policy or generates the monitoring policy and the network status information exposure policy based on the indication information from the AF.

For example, the monitoring policy generated by the PCF based on the indication information #1 includes the reporting target network element identifier and/or the manner of reporting the network status information. The reporting target network element identifier is an identifier of the UPF.

For example, the network status information exposure policy generated by the PCF based on the indication information #1 includes the manner of receiving the network status information of the to-be-monitored service flow from the RAN.

For another example, the network status information exposure policy generated by the PCF based on the indication information #1 and the indication information #2 includes a manner of receiving the network status information of the to-be-monitored service flow from the RAN and the indication information #2.

For another example, the network status information exposure policy generated by the PCF based on the indication information #1, the indication information #2, and the indication information #3 includes: the manner of receiving the network status information of the to-be-monitored service flow from the RAN, the indication information #2, the indication information #3, the manner of detecting the first transport layer feedback message that is from the UE, and the manner of adding the information indicating the network status to the first transport layer feedback message.

S303. The PCF sends the PCC rule to the SMF. Correspondingly, the SMF receives the PCC rule from the PCF.

As described above, the PCC rule includes the monitoring policy, or includes the monitoring policy and the network status information exposure policy. Therefore, the PCF may send the monitoring policy or send the monitoring policy and the network status information exposure policy to the SMF.

For example, the PCF sends the PCC rule to the SMF by using a session management (session management, SM) policy association establishment (SM policy association establishment) procedure. For example, the PCF sends the PCC rule to the SMF through an Npcf_SMPolicyControl_Create response (Npcf_SMPolicyControl_Create Response) service operation.

For another example, the PCF sends the PCC rule to the SMF by using a session management policy association modification (SM policy association modification) procedure. For example, the PCF sends the PCC rule to the SMF through an Npcf_SMPolicyControl_UpdateNotify request (Npcf_SMPolicyControl_UpdateNotify Request) service operation.

Optionally, in S303, the PCF further sends indication information #4 to the SMF, where the indication information #4 indicates to perform network status monitoring on the to-be-monitored service flow and expose the network status information of the to-be-monitored service flow.

Optionally, if the PCF receives the indication information #2 and/or the indication information #3 from the AF, but the network status information exposure policy generated by the PCF does not include the indication information #2 and/or the indication information #3, in S303, the PCF further sends the indication information #2 and/or the indication information #3 to the SMF.

S304. The SMF sends the monitoring configuration information to the RAN. Correspondingly, the RAN receives the monitoring configuration information from the SMF.

The SMF sends the monitoring configuration information to the RAN based on the monitoring policy from the PCF, to be specific, the SMF determines the monitoring configuration information based on the monitoring policy, and sends the monitoring configuration information to the RAN.

For example, that the SMF sends the monitoring configuration information to the RAN includes: The SMF sends an N2 SM message (N2 SM message) to the RAN, where the N2 SM message includes the monitoring configuration information. For example, the SMF sends an N2 SM-related container to the AMF, where the N2 SM-related container includes the N2 SM message, and then the AMF sends the N2 SM message to the RAN side.

Optionally, if the SMF receives the network status information exposure policy from the PCF, the method 300 further includes S305.

S305. The SMF sends the network status information exposure rule to the UPF. Correspondingly, the UPF receives the network status information exposure rule from the SMF.

The SMF sends the network status information exposure rule to the UPF based on the network status information exposure policy from the PCF. To be specific, the SMF determines the network status information exposure rule based on the network status information exposure policy, and sends the network status information exposure rule to the UPF. For example, the network status information rule is included in a packet detection rule (packet detection rule, PDR) corresponding to the to-be-monitored service flow.

For example, that the SMF sends the network status information exposure rule to the UPF includes: The SMF sends an N4 session establishment request (N4 session establishment request) message to the UPF, where the N4 session establishment request message includes the network status information exposure rule. Alternatively, that the SMF sends the network status information exposure rule to the UPF includes: The SMF sends an N4 session modification request (N4 session modification request) message to the UPF, where the N4 session modification request message includes the network status information exposure rule.

Optionally, if the SMF receives the indication information #2 and/or the indication information #3 from the PCF, but the network status information exposure rule sent by the SMF to the UPF does not include the indication information #2 and/or the indication information #3, in S305, the SMF further sends the indication information #2 and/or the indication information #3 to the UPF.

Optionally, if the UPF receives the indication information #2 from the SMF, the method 300 further includes S306 and 5307. Certainly, even if the UPF does not receive the indication information #2 from the SMF, in the method 300, S306 and S307 may be performed.

Optionally, in S305, the UPF further receives the monitoring configuration information from the SMF. To be specific, the SMF generates the corresponding monitoring configuration information based on the monitoring policy and sends the monitoring configuration information to the UPF side. The monitoring configuration information on the UPF side includes a method for obtaining the network status information of the to-be-monitored service. For example, the method for obtaining the network status information of the to-be-monitored service flow is obtaining the network status information of the to-be-monitored service by using a GTP-U header of a user plane uplink data packet.

Optionally, the network status information exposure rule is included in the monitoring configuration information.

S306. The UPF receives a TCP connection establishment message #1 from the UE.

The TCP connection establishment message #1 (an example of a first transport layer data packet) is for establishing a TCP connection between the UE and the AS, and the TCP connection is for transmitting the to-be-monitored service flow.

As shown in (b) in FIG. 4, a TCP header of the TCP connection establishment message #1 includes the following fields: a header length, a reserved field, an AE, CWR, ECE, a URG flag, an ACK flag, a PSH flag, an RST flag, a SYN flag, and a FIN flag. The SYN flag is set to "1". According to the schematic diagram of the TCP header of the TCP connection establishment message shown in (b) in FIG. 4, if a SYN flag in a TCP header of a packet received by the UPF from the UE is set to "1", the packet is the TCP connection establishment message #1.

S307. The UPF sends a TCP connection establishment message #2 to the AS. Correspondingly, the AS receives the TCP connection establishment message #2 from the UPF.

Specifically, the UPF sends the TCP connection establishment message #2 (an example of a second transport layer data packet) to the AS based on the TCP connection establishment message #1. The TCP connection establishment message #2 includes the indication information indicating that exposure of the network status information by using the transport layer is supported. Correspondingly, the AS determines, based on the indication information that is included in the TCP connection establishment message #2 and indicates that exposure of the network status information by using the transport layer is supported, that the UE supports the capability of exposing the network status information by using the transport layer. It should be understood that, that the AS determines that the UE supports the capability of exposing the network status information by using the transport layer does not mean that the UE actually supports the capability of exposing the network status information by using the transport layer, but the AS considers that the UE supports the capability of exposing the network status information by using the transport layer.

According to the schematic diagram of the TCP header of the TCP connection establishment message shown in (b) in FIG. 4, when values of three bits: AE, CWR, and ECE are "1 1 1", "0 1 0", "0 1 1", "1 1 0", or "1 0 0", the three bits AE, CWR, and ECE indicate that exposure of the network status information by using the transport layer is supported. To be specific, when the UPF sends the TCP connection establishment message #2 to the AS based on the TCP connection establishment message #1, the UPF sets the three bits AE, CWR, and ECE in the TCP header of the TCP connection establishment message #1 to "1 1 1", "0 1 0", "0 1 1", "1 1 0", or "1 0 0", generates the TCP connection establishment message #2, and sends the TCP connection establishment message #2 to the AS. For example, if TCP connection establishment is initiated by the UE, the UPF sets the three bits AE, CWR, and ECE in the TCP header of the TCP connection establishment message #1 to "1 1 1", and generates the TCP connection establishment message #2. If TCP connection establishment is initiated by the AS, the UPF sets the three bits AE, CWR, and ECE in the TCP header of the TCP connection establishment message #1 to "0 1 0", "0 1 1", "1 1 0", or "1 0 0", and generates the TCP connection establishment message #2. If the three bits AE, CWR, and ECE are set to "0 1 0", it indicates that adding an ECN mark to an IP header of a TCP initial establishment message or a TCP initial establishment acknowledgement message is not supported. If the three bits AE, CWR, and ECE are set to "0 1 1", it indicates that the UPF supports setting an ECN field in an IP header of a TCP initial establishment message or a TCP initial establishment acknowledgement message to "01". If the three bits AE, CWR, and ECE are set to "1 1 0", it indicates that the UPF supports setting an ECN field in an IP header of a TCP initial establishment message or a TCP initial establishment acknowledgement message to "11". If the three bits AE, CWR, and ECE are set to "1 0 0", it indicates that the UPF supports setting an ECN field in an IP header of a TCP initial establishment message or a TCP initial establishment acknowledgement message to "10".

Optionally, before the UPF sends the TCP connection establishment message #2 to the AF, the UPF determines, based on the TCP connection establishment message #1, whether the UE supports the capability of exposing the network status information by using the transport layer. To be specific, the UPF determines whether values of the three bits AE, CWR, and ECE in the TCP header of the TCP connection establishment message #1 are "1 1 1", "0 1 0", "0 1 1", "1 1 0", or "1 0 0". If the UPF determines, based on the TCP connection establishment message #1, that the UE does not support the capability of exposing the network status information by using the transport layer, the UPF generates the TCP connection establishment message #2 by setting the three bits AE, CWR, and ECE in the TCP header of the TCP connection establishment message #1 to "1 1 1", "0 1 0", "0 1 1", "1 1 0", or "1 0 0". If the UPF determines, based on the TCP connection establishment message #1, that the UE supports the capability of exposing the network status information by using the transport layer, the UPF directly forwards the TCP connection establishment message #1 to the AS, that is, the TCP connection establishment message #2 is the TCP connection establishment message #1.

S308. The AS sends a TCP connection establishment message #3 to the UPF.

According to the schematic diagram of the TCP header of the TCP connection establishment message shown in (b) in FIG. 4, if a SYN flag in a TCP header of a packet received by the UPF from the AS is set to "1", the packet is the TCP connection establishment message #3. The TCP connection establishment message #3 is for establishing a TCP connection between the UE and the AS, and the TCP connection is for transmitting the to-be-monitored service flow. If TCP connection establishment is initiated by the UE, the TCP connection establishment message #3 is a response message of the TCP connection establishment message #2.

Correspondingly, after receiving the TCP connection establishment message #3, the UPF determines, based on the TCP connection establishment message #3, whether the AS supports the capability of exposing the network status information by using the transport layer. If values of three bits AE, CWR, and ECE in the TCP connection establishment message #3 are "1 1 1", "0 1 0", "0 1 1", "1 1 0", or "1 0 0", the UPF determines that the AS supports the capability of exposing the network status information by using the transport layer. Otherwise, the UPF determines that the AS does not support the capability of exposing the network status information by using the transport layer.

It may be understood that, after the UPF receives the TCP connection establishment message #3, the method 300 further includes: The UPF forwards the TCP connection establishment message #3 to the UE.

S309. The RAN sends the network status information to the UPF. Correspondingly, the UPF receives the network status information from the RAN.

The RAN sends the network status information of the to-be-monitored service flow to the UPF based on the monitoring configuration information. The monitoring configuration information may include an identifier of the to-be-monitored service flow, for example, a QoS flow identifier or a PDU session identifier.

For example, if the monitoring configuration information received by the RAN includes the manner of reporting the network status information, and the manner includes reporting the network status information by using a GTP-U header of an uplink data packet, that the RAN sends the network status information to the UPF includes: The RAN sends an uplink data packet to the UPF, where a GTP-U layer of the uplink data packet includes the network status information of the to-be-monitored service flow. The uplink data packet is a data packet received by the RAN from the UE, or a data packet generated by the RAN.

For another example, if the manner of reporting the network status information includes a control plane manner, that the RAN sends the network status information to the UPF includes: The RAN sends the network status information of the to-be-monitored service flow to the UPF via the SMF. To be specific, the RAN sends the network status information of the to-be-monitored service flow to the SMF via the AMF, and then the SMF forwards the network status information of the to-be-monitored service flow to the UPF.

S310. The UPF receives at least one data packet from the AS. Correspondingly, the AS sends the at least one data packet to the UPF.

It should be noted that the at least one data packet is a data packet in the to-be-monitored service flow. The at least one data packet may be received by the UPF before receiving the network status information, at a moment when the network status information is received, or after receiving the network status information.

S311. The UPF determines an ECN mark of the at least one data packet.

Specifically, the UPF determines the ECN mark of the at least one data packet by parsing an IP header of each of the at least one data packet.

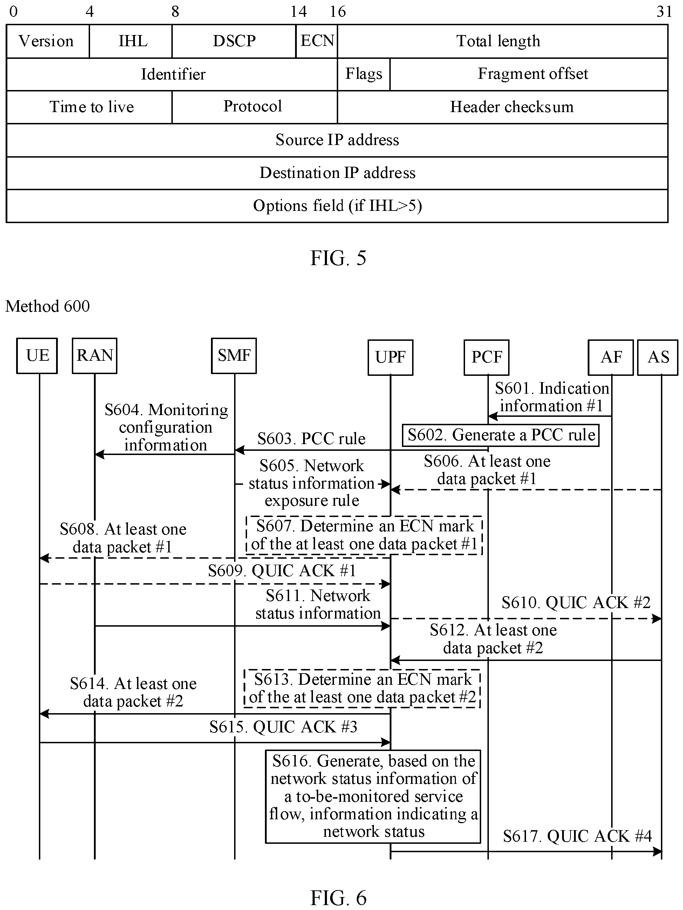

FIG. 5 is a schematic diagram of an IP version 4 (IP version 4, IPv4) header of a data packet. As shown in FIG. 5, the IPv4 header of the data packet includes the following content: a version (version), an Internet header length (Internet header length, IHL), a differentiated services code point (differentiated services code point, DSCP), an ECN, a total length (total length) of the data packet, a data packet identifier (identifier), flags (flags), a fragment offset (fragment offset), time to live (time to live), a protocol (protocol), header checksum (header checksum), a source IP address, a destination IP address, and an options (options) field (if IHL>5). If a value of the ECN field is "00", the data packet is a data packet that does not carry an ECN mark. If the value of the ECN field is "01", the data packet is a data packet marked with an ECT1 mark. If the value of the ECN field is "10", the data packet is a data packet carrying an ECTO mark. If a value of the ECN field is "11", the data packet is a data packet carrying a CE mark.

It is assumed that the at least one data packet includes 20 data packets, and a quantity of payload octets of each data packet is 4. The UPF determines, by parsing the IP layer of each data packet, that ECN marks of the 20 data packets are as follows: the quantity of data packets carrying the CE mark is 0, the quantity of payload octets of the data packets carrying the CE mark is 0, the quantity of payload octets of data packets carrying the ECT1 mark is 40, and the quantity of payload octets of data packets carrying the ECTO mark is 40.

It should be noted that, if the UPF receives the network status information of the to-be-monitored service flow from the RAN before receiving the at least one data packet or at a moment when receiving the at least one data packet, the UPF may determine the ECN mark of the at least one data packet, so that after receiving a TCP ACK #1 from the UE, the UPF sends a TCP ACK #2 to the AS based on the network status information of the to-be-monitored service flow and the ECN mark of the at least one data packet.

It should be further noted that, if the AS determines, based on the received TCP connection establishment message #2, that the UE supports the capability of feeding back the network status information by using the transport layer, the AS adds the ECN mark to the at least one data packet, to indicate that the AS supports the capability of feeding back the network status information by using the transport layer, or indicate network congestion. For example, if the ECN mark carried in the at least one data packet is an ECTO mark or an ECT1 mark, the at least one data packet may indicate that the AS supports a capability of feeding back the network status information by using the transport layer. If the at least one data packet includes a data packet carrying a CE mark, the at least one data packet indicates network congestion.

S312. The UPF sends the at least one data packet to the UE. Correspondingly, the UE receives the at least one data packet.

S313. The UE sends the TCP ACK #1 to the UPF. Correspondingly, the UPF receives the TCP ACK #1 from the UE.

After receiving the at least one data packet, the UE sends the TCP ACK #1 (an example of the first transport layer feedback message) to the UPF. Correspondingly, after the UPF sends the at least one data packet to the UE, if an ACK flag in a TCP header of a packet received from the UE is set to "1", the UPF determines that the packet is the TCP ACK #1.

Optionally, if the UE supports the capability of exposing the network status information by using the transport layer, the UE may determine the ECN mark of the at least one data packet, and feed back the ECN mark of the at least one data packet by using the TCP ACK #1. As described in S302, the UE may assign a value to r.cep in an ACE field and values to r.ceb, r.e0b, and r.elb in an options field in a TCP header of the TCP ACK #1, so that the TCP ACK #1 may indicate the ECN mark of the at least one data packet. For example, based on the ECN mark of the at least one data packet, the UE assigns 0 to r.cep, 0 to r.ceb, 40 to r.e0b, and 40 to r.e1b.

It should be noted that the TCP ACK #1 is received by the UPF at a moment when receiving the network status information of the to-be-monitored service flow, or the TCP ACK #1 is received by the UPF after receiving the network information of the to-be-monitored service flow.

S314. The UPF generates, based on the network status information of the to-be-monitored service flow, the information indicating the network status.

The information indicating the network status includes at least one of the following: a quantity of data packets carrying a CE mark, a quantity of payload octets of the data packets carrying the CE mark, a quantity of payload octets of data packets carrying an ECT1 mark, or a quantity of payload octets of data packets carrying an ECTO mark.

Specifically, the information that is generated by the UPF and that indicates the network status meets the following condition: A ratio of the quantity that is of data packets carrying the CE mark and that is determined based on the information indicating the network status to a quantity of the at least one data packet is for representing the network status of the to-be-monitored service flow. The network status of the to-be-monitored service flow is determined based on the network status information of the to-be-monitored service flow.

For example, if it is determined, based on the network status information of the to-be-monitored service flow, that a congestion degree of the to-be-monitored service flow is 60%, the information that is generated by the UPF and that indicates the network status meets the following condition: The ratio of the quantity that is of data packets carrying the CE mark and that is determined based on the information indicating the network status to a quantity of the at least one data packet is 60%.

For example, when the at least one data packet includes 20 data packets, and the quantity of payload octets of each data packet is 4, the information that is generated by the UPF and that indicates the network status includes: The quantity of data packets carrying the CE mark is 12, and/or the quantity of payload octets of the data packets carrying the CE mark is 48. Alternatively, the information that is generated by the UPF and that indicates the network status includes: The quantity of payload octets of data packets carrying the ECT1 mark is 32; and when a remaining data packet is a data packet carrying the CE mark by default, it may be determined, based on the information indicating the network status, that the quantity of data packets carrying the CE mark is 12. Alternatively, the information that is generated by the UPF and that indicates the network status includes: Both the quantity of payload octets of data packets carrying the ECT1 mark and the quantity of payload octets of data packets carrying the ECTO mark are 16; and when a remaining data packet is a data packet carrying the CE mark by default, it may be determined, based on the information indicating the network status, that the quantity of data packets carrying the CE mark is 12. Alternatively, the information that may be generated by the UPF and that indicates the network status includes: The quantity of data packets carrying the CE mark is 12, the quantity of payload octets of the data packets carrying the CE mark is 48, and both the quantity of payload octets of data packets carrying the ECT1 mark and the quantity of payload octets of data packets carrying the ECTO mark are 16.

Optionally, if S311 is performed in the method 300, or the TCP ACK #1 indicates the ECN mark of the at least one data packet, the UPF generates, based on the ECN mark of the at least one data packet and the network status information of the to-be-monitored service flow, the information indicating the network status.

For example, it is assumed that the congestion degree of the to-be-monitored service flow is determined to be 60% based on the network status information of the to-be-monitored service flow, and that the ECN mark of the at least one data packet is: The quantity of data packets carrying the CE mark is 0, the quantity of payload octets of data packets carrying the CE mark is 0, and both the quantity of payload octets of data packets carrying the ECT1 mark and the quantity of payload octets of data packets carrying the ECTO mark are 40. Further, the information that is generated by the UPF and that indicates the network status meets the following condition: A ratio of the quantity that is of data packets carrying the CE mark and that is determined based on the information indicating the network status to a quantity of the at least one data packet is 60%.

For example, the information that is generated by the UPF and that indicates the network status includes: The quantity of data packets carrying the CE mark is 12, the quantity of payload octets of the data packets carrying the CE mark is 48, and both the quantity of payload octets of data packets carrying the ECT1 mark and the quantity of payload octets of data packets carrying the ECTO mark are 16. Alternatively, the information that is generated by the UPF and that indicates the network status includes: The quantity of data packets carrying the CE mark is 12, the quantity of payload octets of the data packets carrying the CE mark is 48, the quantity of payload octets of data packets carrying the ECT1 mark is 0, and the quantity of payload octets of data packets carrying the ECTO mark is 32.

S315. The UPF sends the TCP ACK #2 to the AS. Correspondingly, the AS receives the TCP ACK #2 from the UPF.

The UPF sends the TCP ACK #2 to the AS based on the TCP ACK #1, where the TCP ACK #2 includes the information indicating the network status of the to-be-monitored service flow.

In a possible implementation, if the UE does not support the capability of exposing the network status information by using the transport layer, r.cep, r.ceb, r.e0b, and r.elb in the TCP ACK #1 sent by the UE to the UPF have no value or have a value of 0. Further, the UPF generates the TCP ACK #2 by assigning a value to one or more of r.cep, r.ceb, r.e0b, and r.elb based on the generated information indicating the network status. In other words, the UPF adds, to the TCP ACK #1, the information indicating the network status, to generate the TCP ACK #2.

For example, if the information that is generated by the UPF and that indicates the network status includes that the quantity of data packets carrying the CE mark is 12, the UPF assigns a value 12 to r.cep in the TCP ACK #1, to generate the TCP ACK #2. For another example, if the information that is generated by the UPF and that indicates the network status includes that both the quantity of payload octets of data packets carrying the ECT1 mark and the quantity of payload octets of data packets carrying the ECTO mark are 16, the UPF assigns 16 to both r.e0b and r.elb in the TCP ACK #1, to generate the TCP ACK #2.

In a possible implementation, if the UE supports the capability of exposing the network status information by using the transport layer, r.cep, r.ceb, r.e0b, and r.elb in the TCP ACK #1 sent by the UE to the UPF have a value. Further, the UPF generates the TCP ACK #2 by modifying a value of one or more of r.cep, r.ceb, r.e0b, and r.elb based on the generated information indicating the network status. In other words, the UPF modifies some fields in the TCP ACK #1, to generate the TCP ACK #2. In this case, S311 may not be performed in the method 300.

For example, values of r.cep, r.ceb, r.e0b, and r.elb in the TCP ACK #1 are 0, 0, 40, and 40 respectively, and the information that is generated by the UPF and that indicates the network status includes: The quantity of data packets carrying the CE mark is 12, the quantity of payload octets of the data packets carrying the CE mark is 48, and both the quantity of payload octets of data packets carrying the ECT 1 mark and the quantity of payload octets of data packets carrying the ECTO mark are 16. In this case, the UPF modifies the values of r.cep, r.ceb, r.e0b, and r.elb in the TCP ACK #1 to 12, 48, 16, and 16 respectively, to generate the TCP ACK #2.

After receiving the TCP ACK #2 from the UPF, the AS may determine the network status of the to-be-monitored service flow based on the information that is included in the TCP ACK #2 and that indicates the network status.

For example, the information that is included in the TCP ACK #2 and that indicates the network status includes: The quantity of data packets carrying the CE mark is 12, that is, a value of r.cep in the TCP ACK #2 is 12. When the AS determines that the TCP ACK #2 corresponds to the at least one data packet, the AS determines the congestion degree of the to-be-monitored service flow based on a ratio of the quantity (12) of data packets carrying the CE mark to the quantity (20) of the at least one data packet. For example, the AS may determine the quantity of the at least one data packet based on an acknowledgement number field in a TCP header of the TCP ACK #2.

For another example, the information that is included in the TCP ACK #2 and that indicates the network status includes: The quantity of data packets carrying the CE mark is 12, the quantity of payload octets of the data packets carrying the CE mark is 48, the quantity of payload octets of data packets carrying the ECT1 mark is 16, and the quantity of payload octets of data packets carrying the ECTO mark is 16, that is, values of r.cep, r.ceb, r.e0b, and r.elb in the TCP ACK #2 are 12, 48, 16, and 16 respectively. In this case, the AS may determine, based on the values of r.ceb, r.e0b, and r.e1b, that the quantity of the at least one data packet is 20, and determine, based on the value of r.cep, that the quantity of data packets carrying the CE mark is 12, to determine that the congestion degree of the to-be-monitored service flow is 60%.

It should be noted that, except one or more of r.cep, r.ceb, r.e0b, and r.e1b, other fields of the TCP ACK #1 and the TCP ACK #2 are the same.

Further, when the AS determines, based on the TCP ACK #2, the network status of the to-be-monitored service flow, the AS may adjust a service parameter of the to-be-monitored service flow based on the network status of the to-be-monitored service flow, for example, dynamically adjust a bit rate of a media service, to implement quick exposure of the network status information, and ensure service experience of a user and improve effective utilization of network resources.

It should be understood that in the method shown in FIG. 3, the sequence numbers of the processes do not mean an order of execution, and the order of execution of the processes should be determined according to functions and internal logic thereof, and should not constitute any limitation on the implementation processes of embodiments of this application. For example, S309 may be performed before S310, or may be performed after S313, or 5309 may be performed between S310 and S313.

In this embodiment of this application, when the transport layer protocol used for the to-be-monitored service flow is TCP, if the UPF obtains the network status information of the to-be-monitored service flow, the UPF generates, based on the network status information of the to-be-monitored service flow, the information indicating the network status of the to-be-monitored service flow. Further, after receiving the TCP ACK #1 from the UE, the UPF assigns values to some fields (that is, one or more of r.cep, r.ceb, r.e0b, and r.elb) in the TCP ACK #1 based on the information indicating the network status, or modifies values of some fields in the TCP ACK #1, to generate the TCP ACK #2, so that the TCP ACK #2 includes the information indicating the network status of the to-be-monitored service flow. Therefore, the application server may determine the network status of the to-be-monitored service flow based on the TCP ACK #2. According to the method provided in this embodiment of this application, even if the UE does not support L4S feedback by using TCP, the network status of the to-be-monitored service flow can be exposed to the AS by using the TCP layer, so that the AS adjusts the service parameter of the to-be-monitored service flow based on the network status of the to-be-monitored service flow, for example, adjusts a coding configuration to adapt to a media output bit rate, to ensure service experience of a user and improve effective utilization of network resources.

FIG. 6 is a schematic flowchart of a communication method according to an embodiment of this application. Specifically, in FIG. 6, an example in which a transport layer protocol used for a to-be-monitored service flow is the QUIC protocol is used to describe how to expose network status information of the to-be-monitored service flow by using a transport layer according to the method provided in this embodiment of this application.

As described in S230 in the method 200, there are three trigger conditions under which the UPF generates, based on the network status information of the to-be-monitored service flow, the information indicating the network status. When the UPF generates, based on different trigger conditions, the information indicating the network status, the method 600 includes different steps.

In a possible implementation, if the UPF generates, when obtaining the network status information of the to-be-monitored service flow and the first transport layer feedback message, the information indicating the network status, the method 600 may include S601 to S604, S611, S612, and S614 to S617.

In another possible implementation, if the UPF generates, when receiving the network status information exposure rule, the information indicating the network status, the method 600 may include S601 to S605, S611, S612, and S614 to S617.

In still another possible implementation, if the UPF generates, when determining that the AS supports the capability of exposing the network status information by using the transport layer, the information indicating the network status, the method 600 may include S601 to S604, S606, S611, S612, and S614 to S617.

Optionally, the method 600 further includes S606 to S610. Optionally, the method 600 further includes S613.

The following describes in detail steps included in the method 600.

S601. The AF sends indication information #1 to a PCF. Correspondingly, the PCF receives the indication information #1 from the AF.

For S601, refer to the descriptions of S301 in the method 300.

When the transport layer protocol used for the to-be-monitored service flow is the QUIC protocol, indication information #2 sent by the AF to the PCF may indicate to intervene in an ECN capability negotiation procedure between the UE and the AS, or indicate to intervene in an L4S capability negotiation procedure between the UE and the AS. An exposure rule indicated by indication information #3 sent by the AF to the PCF includes: performing ECN feedback by using QUIC, or performing L4S feedback by using QUIC.

S602. The PCF generates a PCC rule.

For the PCC rule and a manner in which the PCF generates the PCC rule, refer to the descriptions of S302 in the method 300.

It should be noted that, when the transport layer protocol used for the to-be-monitored service flow is the QUIC protocol, the first transport layer feedback message is the QUIC ACK. A content structure of the QUIC ACK is as follows:

```
          ACK frame (ACK Frame) {
                   Type (Type) (i) = 0x02..0x03,
                   Largest Acknowledged (Largest Acknowledged) (i),
                   ACK delay (ACK Delay) (i),
                   ACK range count (ACK Range Count) (i),
                   First ACK range (First ACK Range) (i),
                   ACK range (ACK Range) (..)...,
                    [ECN counts (ECN counts) (..)],
          }
          The ECN counts include the following three ECN count bits:
          ECN Counts {
                   ECTO count (ECT0 Count) (i),
          ECT1 count (ECT1 Count) (i),
          ECT-CE count (ECT-CE Count) (i),
          }
```

The ECTO count indicates a quantity of data packets carrying an ECTO mark, the ECT1 count indicates a quantity of data packets carrying an ECT1 mark, and the ECT-CE count indicates a quantity of data packets carrying a CE mark.

According to the foregoing schematic diagram of the content structure of the QUIC ACK, a manner that is of detecting the first transport layer feedback message from the UE and that is included in a network status information exposure policy includes: If a type parameter in a frame format of a packet from the UE is "0x02..0x03", the packet is the QUIC ACK, that is, the packet is the first transport layer feedback message.

Further, a manner of adding the information indicating the network status to the first transport layer feedback message includes: modifying a value of one or more of the ECTO count, the ECT1 count, and the ECT-CE count, or assigning a value to one or more of the ECTO count, the ECT1 count, and the ECT-CE count, so that one or more of the ECTO count, the ECT1 count, and the ECT-CE count indicate the network status of the to-be-monitored service flow.

S603. The PCF sends the PCC rule to the SMF. Correspondingly, the SMF receives the PCC rule from the PCF.

For S603, refer to the descriptions of S303 in the method 300.

S604. The SMF sends the monitoring configuration information to the RAN. Correspondingly, the RAN receives the monitoring configuration information from the SMF.

For S604, refer to the descriptions of S304 in the method 300.

Optionally, if the SMF receives the network status information exposure policy from the PCF, the method 600 further includes S605.

S605. The SMF sends the network status information exposure rule to the UPF. Correspondingly, the UPF receives the network status information exposure rule from the SMF.

For S605, refer to the descriptions of S305 in the method 300.

Optionally, if the UPF receives the indication information #2 from the SMF, the method 600 further includes S606 to S610.

S606. The UPF receives at least one data packet #1 from the AS. Correspondingly, the AS sends the at least one data packet #1 to the UPF.

The at least one data packet #1 is a data packet in the to-be-monitored service flow.

S607. The UPF determines an ECN mark of the at least one data packet #1.

Specifically, the UPF determines the ECN mark of the at least one data packet #1 by parsing an IP layer of each of the at least one data packet #1. For a manner of determining, by the UPF, the ECN mark of the at least one data packet #1, refer to the descriptions of S311 in the method 300.

It should be noted that the ECN mark of the at least one data packet #1 determined by the UPF includes a quantity of data packets #1 carrying the CE mark, a quantity of data packets #1 carrying the ECT1 mark, and a quantity of data packets #1 carrying the ECTO mark in the at least one data packet #1.

Optionally, in S607, the UPF may determine, based on the at least one data packet #1, whether the AS supports the capability of exposing the network status information by using the transport layer. If a value of an ECN field in the IP header of the at least one data packet #1 is "01", "10", or "11", the UPF determines that the AS supports the capability of exposing the network status information by using the transport layer. Otherwise, the UPF determines that the AS does not support the capability of exposing the network status information by using the transport layer.

S608. The UPF sends the at least one data packet #1 to the UE. Correspondingly, the UE receives the at least one data packet #1 from the UPF.

S609. The UE sends a QUIC ACK #1 to the UPF. Correspondingly, the UPF receives the QUIC ACK #1 from the UE.

After receiving the at least one data packet #1, the UE sends a QUIC ACK #1 (an example of a first transport layer data packet) for the at least one data packet #1 to the UPF. Correspondingly, after the UPF sends the at least one data packet #1 to the UE, if a type parameter that is in a frame format of a packet and that is received from the UE is "0x02..0x03", the UPF determines that the packet is the QUIC ACK #1.

S610. The UPF sends a QUIC ACK #2 to the AS. Correspondingly, the AS receives the QUIC ACK #2 from the UPF.

Specifically, the UPF sends the QUIC ACK #2 (an example of a second transport layer data packet) to the AS based on the QUIC ACK #1, where the QUIC ACK #2 includes indication information indicating that exposure of the network status information by using the transport layer is supported. Correspondingly, the AS determines, based on the indication information that is included in the QUIC ACK #2 and indicates that exposure of the network status information by using the transport layer is supported, that the UE supports the capability of exposing the network status information by using the transport layer. It should be understood that, that the AS determines that the UE supports the capability of exposing the network status information by using the transport layer does not mean that the UE actually supports the capability of exposing the network status information by using the transport layer, but the AS considers that the UE supports the capability of exposing the network status information by using the transport layer.

According to the content format of the QUIC ACK shown in S602, when the values of the ECTO count, the ECT1 count, and the ECT-CE count represent the ECN mark of the at least one data packet #1, the ECTO count, the ECT1 count, and the ECT-CE count indicate that exposure of the network status information by using the transport layer is supported. To be specific, when sending the QUIC ACK #2 to the AS based on the QUIC ACK #1, the UPF assigns values to the ECTO count, the ECT1 count, and the ECT-CE count in the QUIC ACK #1 based on the ECN mark of the at least one data packet #1, to generate the QUIC ACK #2, and sends the QUIC ACK #2 to the AS.

For example, the ECN mark of the at least one data packet #1 determined by the UPF is that, in the at least one data packet #1, the quantity of data packets #1 carrying the CE mark and the quantity of data packets #1 carrying the ECT1 mark are 0, and the quantity of data packets #1 carrying the ECTO mark is 10. In this case, the UPF assigns a value of 10 to the ECTO count and the ECT1 count, and assigns a value of 0 to the ECT-CE count.

Optionally, before the UPF sends the QUIC ACK #2 to the AF, the UPF determines, based on the QUIC ACK #1, whether the UE supports the capability of exposing the network status information by using the transport layer, to be specific, the UPF determines whether the values of the ECTO count, the ECT1 count, and the ECT-CE count in the QUIC ACK #1 represent the ECN mark of the at least one data packet #1. For example, if values of the ECTO count and the ECT1 count in the QUIC ACK #1 are 10, and the value of the ECT-CE count is 0, the UPF determines that the UE supports the capability of exposing the network status information by using the transport layer, and the UPF directly forwards the QUIC ACK #1 to the AS, that is, the QUIC ACK #2 is the QUIC ACK #1. If the values of the ECTO count, the ECT1 count, and the ECT-CE count in the QUIC ACK #1 are not 10, 10, and 0, the UPF assigns a value 10 to the ECTO count and the ECT1 count in the QUIC ACK #1 based on the ECN mark of the at least one data packet #1, and assigns a value 0 to the ECT-CE count, to generate the QUIC ACK #2.

S611. The RAN sends the network status information to the UPF. Correspondingly, the UPF receives the network status information from the RAN.

For S611, refer to the descriptions of S309 in the method 300.

S612. The UPF receives at least one data packet #2 from the AS. Correspondingly, the AS sends the at least one data packet #2 to the UPF.

It should be noted that the at least one data packet #2 is a data packet in the to-be-monitored service flow. The at least one data packet #2 may be received by the UPF before receiving the network status information, at a moment when the network status information is received, or after receiving the network status information.

S613. The UPF determines an ECN mark of at least one data packet #2.

A manner in which the UPF determines the ECN mark of the at least one data packet #2 is the same as a manner in which the UPF determines the ECN mark of the at least one data packet #1.

It is assumed that the at least one data packet #2 includes 20 data packets #2. The UPF parses an IP layer of each data packet #2, and determines that ECN marks of the 20 data packets #2 are as follows: A quantity of data packets #2 carrying the CE mark is 0, a quantity of data packets #2 carrying the ECT1 mark is 10, and a quantity of data packets #2 carrying the ECTO mark is 10.

It should be noted that, if the UPF receives the network status information of the to-be-monitored service flow from the RAN before receiving the at least one data packet #2 or at a moment when receiving the at least one data packet #2, the UPF may determine the ECN mark of the at least one data packet #2, so that after receiving a QUIC ACK #3 from the UE, the UPF sends a QUIC ACK #4 to the AS based on the network status information of the to-be-monitored service flow and the ECN mark of the at least one data packet #2.

It should be further noted that, if the AS determines, based on the received QUIC ACK #2, that the UE supports the capability of feeding back the network status information by using the transport layer, the AS adds the ECN mark to the at least one data packet #2, to indicate that the AS supports the capability of feeding back the network status information by using the transport layer, or indicate network congestion. For example, if the ECN mark carried in the at least one data packet #2 is an ECTO mark or an ECT1 mark, the at least one data packet #2 may indicate that the AS supports the capability of feeding back the network status information by using the transport layer. If the at least one data packet #2 includes a data packet carrying a CE mark, the at least one data packet #2 indicates network congestion.

S614. The UPF sends the at least one data packet #2 to the UE. Correspondingly, the UE receives the at least one data packet #2.

S615. The UE sends the QUIC ACK #3 to the UPF. Correspondingly, the UPF receives the QUIC ACK #3 from the UE.

After receiving the at least one data packet #2, the UE sends the QUIC ACK #3 (an example of the first transport layer feedback message) to the UPF. Correspondingly, after the UPF sends the at least one data packet #2 to the UE, if a type parameter in a frame format of a packet received from the UE is "0x02..0x03", the UPF determines that the packet is the QUIC ACK #3.

Optionally, if the UE supports the capability of exposing the network status information by using the transport layer, the UE may determine the ECN mark of the at least one data packet #2, and feed back the ECN mark of the at least one data packet #2 by using the QUIC ACK #3. As described in S602, the UE may assign values to an ECTO count, an ECT1 count, and an ECT-CE count in the QUIC ACK #3, so that the QUIC ACK #3 may indicate the ECN mark of the at least one data packet #2. For example, based on the ECN mark of the at least one data packet #2, the UE assigns 10 for the ECTO count and the ECT1 count, and assigns 0 to the ECT-CE count.

It should be noted that the QUIC ACK #3 is received by the UPF at a moment when receiving the network status information of the to-be-monitored service flow, or the QUIC ACK #3 is received by the UPF after receiving the network information of the to-be-monitored service flow.

S616. The UPF generates, based on the network status information of the to-be-monitored service flow, the information indicating the network status.

The information indicating the network status includes at least one of the following: a quantity of data packets #2 carrying the CE mark, a quantity of data packets #2 carrying the ECT1 mark, or a quantity of data packets #2 carrying the ECTO mark.

Specifically, the information that is generated by the UPF and that indicates the network status meets the following condition: A ratio of the quantity that is of data packets #2 carrying the CE mark and that is determined based on the information indicating the network status to a quantity of the at least one data packet #2 is for representing the network status of the to-be-monitored service flow. The network status of the to-be-monitored service flow is determined based on the network status information of the to-be-monitored service flow.

For example, if it is determined, based on the network status information of the to-be-monitored service flow, that a congestion degree of the to-be-monitored service flow is 60%, the information that is generated by the UPF and that indicates the network status meets the following condition: The ratio of the quantity that is of data packets #2 carrying the CE mark and that is determined based on the information indicating the network status to a quantity of the at least one data packet #2 is 60%.

For example, when the at least one data packet #2 includes 20 data packets, the information that is generated by the UPF and that indicates the network status includes that the quantity of data packets #2 carrying the CE mark is 12. Alternatively, the information that is generated by the UPF and that indicates the network status includes: The quantity of data packets #2 carrying the ECT1 mark is 8; and when a remaining data packet #2 is a data packet #2 carrying the CE mark by default, it may be determined, based on the information indicating the network status, that the quantity of data packets #2 carrying the CE mark is 12. Alternatively, the information that is generated by the UPF and that indicates the network status includes: Both the quantity of data packets #2 carrying the ECT1 mark and the quantity of data packets #2 carrying the ECTO mark are 4; and when a remaining data packet is a data packet #2 carrying the CE mark by default, it may be determined, based on the information indicating the network status, that the quantity of data packets #2 carrying the CE mark is 12.

Optionally, if S613 is performed in the method 600, or the QUIC ACK #2 indicates the ECN mark of the at least one data packet #2, the UPF generates, based on the ECN mark of the at least one data packet #2 and the network status information of the to-be-monitored service flow, the information indicating the network status.

For example, it is assumed that the congestion degree of the to-be-monitored service flow is determined to be 60% based on the network status information of the to-be-monitored service flow, and that the ECN mark of the at least one data packet #2 is: The quantity of data packets #2 carrying the CE mark is 0, and both the quantity of data packets carrying the ECT1 mark and the quantity of data packets carrying the ECTO mark are 10. Further, the information that is generated by the UPF and that indicates the network status meets the following condition: A ratio of the quantity that is of data packets #2 carrying the CE mark and that is determined based on the information indicating the network status to a quantity of the at least one data packet #2 is 60%.

For example, the information that is generated by the UPF and that indicates the network status includes: The quantity of data packets #2 carrying the CE mark is 12, and both the quantity of data packets #2 carrying the ECT1 mark and the quantity of data packets #2 carrying the ECTO mark are 4. Alternatively, the information that is generated by the UPF and that indicates the network status includes: The quantity of data packets #2 carrying the CE mark is 12, the quantity of data packets #2 carrying the ECT1 mark is 0, and the quantity of data packets #2 carrying the ECTO mark is 8.

S617. The UPF sends the QUIC ACK #4 to the AS. Correspondingly, the AS receives the QUIC ACK #4 from the UPF.

The UPF sends the QUIC ACK #4 to the AS based on the QUIC ACK #3, where the QUIC ACK #4 includes the information indicating the network status of the to-be-monitored service flow.

In a possible implementation, if the UE does not support the capability of exposing the network status information by using the transport layer, the ECTO count, the ECT1 count, and the ECT-CE count in the QUIC ACK #3 sent by the UE to the UPF have no value or have a value of 0. Further, the UPF assigns a value to one or more of the ECTO count, the ECT1 count, and the ECT-CE count based on the generated information indicating the network status, to generate the QUIC ACK #4. In other words, the UPF adds, to the QUIC ACK #3, the information indicating the network status, to generate the QUIC ACK #4.

For example, if the information that is generated by the UPF and that indicates the network status includes that the quantity of data packets #2 carrying the CE mark is 12, the UPF assigns a value 12 to the ECT-CE count in the QUIC ACK #3, to generate the QUIC ACK #4. For another example, if the information that is generated by the UPF and that indicates the network status includes that both the quantity of data packets #2 carrying the ECT1 mark and the quantity of data packets #2 carrying the ECTO mark are 4, the UPF assigns 4 to both the ECTO count and the ECT1 count in the QUIC ACK #3, to generate the QUIC ACK #4.

In a possible implementation, if the UE supports the capability of exposing the network status information by using the transport layer, the ECTO count, the ECT1 count, and the ECT-CE count in the QUIC ACK #3 sent by the UE to the UPF have a value. Further, the UPF modifies a value of one or more of the ECTO count, the ECT1 count, and the ECT-CE count based on the generated information indicating the network status, to generate the QUIC ACK #4. In other words, the UPF modifies some fields in the QUIC ACK #3, to generate the QUIC ACK #4.

For example, if values of the ECTO count, the ECT1 count, and the ECT-CE count in the QUIC ACK #3 are respectively 10, 10, and 0, the information that is generated by the UPF and that indicates the network status includes: If the quantity of data packets #2 carrying the CE mark is 12, and both the quantity of data packets #2 carrying the ECT1 mark and the quantity of data packets #2 carrying the ECTO mark are 4, the UPF changes values of the ECTO count, the ECT1 count, and the ECT-CE count in the QUCI ACK #3 to 4, 4, and 12, respectively, to generate the QUIC ACK #4.

After receiving the QUIC ACK #4 from the UPF, the AS may determine the network status of the to-be-monitored service flow based on the information that is included in the QUIC ACK #4 and that indicates the network status.

For example, the information that is included in the QUIC ACK #4 and that indicates the network status includes that the quantity of data packets #2 carrying the CE mark is 12, that is, the value of the ECT-CE count in the QUIC ACK #4 is 12. In this case, when the AS determines that the QUIC ACK #4 corresponds to the at least one data packet #2, the AS determines the congestion degree of the to-be-monitored service flow based on a ratio of the quantity (12) of data packets #2 carrying the CE mark to the quantity (20) of the at least one data packet #2. For example, the AS may determine the quantity of the at least one data packet #2 based on the "ACK range count" in the QUIC ACK #4.

For another example, the information that is included in the QUIC ACK #4 and that indicates the network status includes: The quantity of data packets #2 carrying the CE mark is 12, and both the quantity of data packets #2 carrying the ECT1 mark and the quantity of data packets #2 carrying the ECTO mark are 4, that is, the values of the ECTO count, the ECT1 count, and the ECT-CE count in the QUIC ACK #4 are 4, 4, and 12 respectively. In this case, the AS may determine, based on the values of the ECTO count, the ECT1 count, and the ECT-CE count, that the quantity of the at least one data packet #2 is 20, and determine, based on the value of the ECT-CE count, that the quantity of data packets #2 carrying the CE mark is 12, to determine that the congestion degree of the to-be-monitored service flow is 60%.

It should be noted that, except one or more of the ECTO count, the ECT1 count, and the ECT-CE count, other fields of the QUIC ACK #3 and the QUIC ACK #4 are the same.

Further, when determining the network status of the to-be-monitored service flow based on the QUIC ACK #4, the AS may adjust the service parameter of the to-be-monitored service flow based on the network status of the to-be-monitored service flow, for example, dynamically adjust a coding configuration to change a bit rate, to ensure service experience of a user and improve effective utilization of network resources.

It should be understood that in the method shown in FIG. 6, the sequence numbers of the processes do not mean an order of execution, and the order of execution of the processes should be determined according to functions and internal logic thereof, and should not constitute any limitation on the implementation processes of embodiments of this application. For example, S611 may be performed before S612, or may be performed after S615, or S611 may be performed between S612 and S615.

In this embodiment of this application, when the transport layer protocol used for the to-be-monitored service flow is the QUIC protocol, if the UPF obtains the network status information of the to-be-monitored service flow, the UPF generates, based on the network status information of the to-be-monitored service flow, the information indicating the network status of the to-be-monitored service flow. Further, after receiving the QUIC ACK #3 from the UE, the UPF assigns values to some fields (that is, one or more of the ECTO count, the ECT1 count, and the ECT-CE count) in the QUIC ACK #3 based on the information indicating the network status, or modifies values of some fields in the QUIC ACK #3, to generate the QUIC ACK #4, so that the QUIC ACK #4 includes the information indicating the network status of the to-be-monitored service flow. Therefore, the application server may determine the network status of the to-be-monitored service flow based on the QUIC ACK #4. According to the method provided in this embodiment of this application, even if the UE does not support ECN feedback by using QUIC, the network status of the to-be-monitored service flow can be exposed to the AS by using the QUIC layer, so that the AS adjusts the service parameter of the to-be-monitored service flow based on the network status of the to-be-monitored service flow, for example, dynamically adjusts a media coding configuration to change bit rate, to ensure service experience of a user and improve effective utilization of network resources.

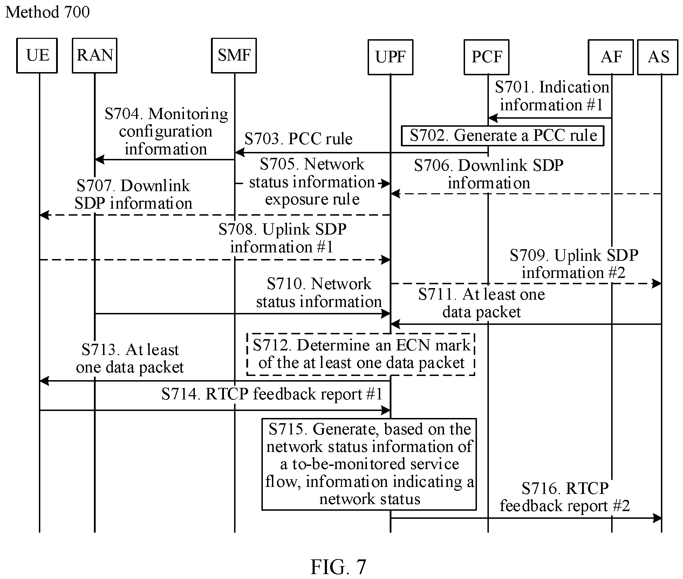

FIG. 7 is a schematic flowchart of a communication method according to an embodiment of this application. Specifically, in FIG. 7, an example in which a transport layer protocol used for a to-be-monitored service flow is RTP or RTCP is used to describe how to expose network status information of the to-be-monitored service flow by using a transport layer according to the method provided in this embodiment of this application.

As described in S230 in the method 200, there are three trigger conditions under which the UPF generates, based on the network status information of the to-be-monitored service flow, the information indicating the network status. When the UPF generates, based on different trigger conditions, the information indicating the network status, the method 700 includes different steps.

In a possible implementation, if the UPF generates, when obtaining the network status information of the to-be-monitored service flow and the first transport layer feedback message, the information indicating the network status, the method 700 may include S701 to S704, S710, S711, and S713 to S716.

In another possible implementation, if the UPF generates, when receiving the network status information exposure rule, the information indicating the network status, the method 700 may include S701 to S705, S710, S711, and S713 to S716.

In still another possible implementation, if the UPF generates, when determining that the AS supports the capability of exposing the network status information by using the transport layer, the information indicating the network status, the method 700 may include S701 to S704, S706, S710, S711, and S713 to S716.

Optionally, the method 700 further includes S707 to S709. Optionally, the method 700 further includes S712.

The following describes in detail steps included in the method 700.

S701. The AF sends indication information #1 to a PCF. Correspondingly, the PCF receives the indication information #1 from the AF.

For S701, refer to the descriptions of S301 in the method 300.

When the transport layer protocol used for the to-be-monitored service flow is RTP or RTCP, indication information #2 sent by the AF to the PCF may indicate to intervene in an ECN capability negotiation procedure between the UE and the AS, or indicate to intervene in an L4S capability negotiation procedure between the UE and the AS. An exposure rule indicated by indication information #3 sent by the AF to the PCF includes: performing ECN feedback by using RTP or RTCP, or performing L4S feedback by using RTP or RTCP.

S702. The PCF generates a PCC rule.

For the PCC rule and a manner in which the PCF generates the PCC rule, refer to the descriptions of S302 in the method 300.

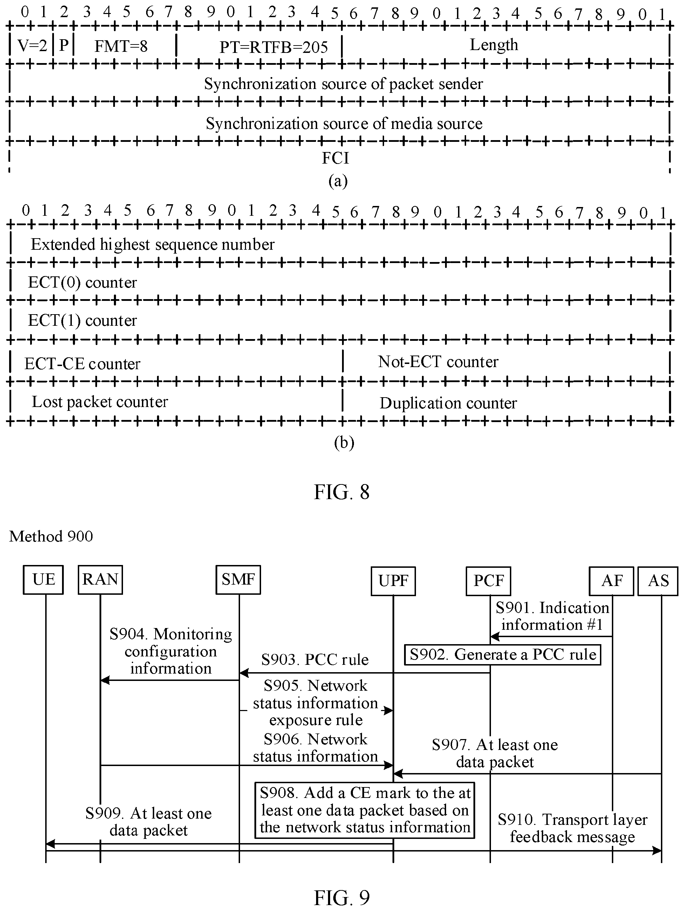

It should be noted that, when the transport layer protocol used for the to-be-monitored service flow is RTP or RTCP, the first transport layer feedback message is an RTCP feedback report. FIG. 8 is a schematic diagram of a format of the RTCP feedback report. As shown in (a) in FIG. 8, the RTCP feedback report includes the following fields: a version (version, V), a padding bit (padding, P), a feedback information type (feedback message type, FMT), a packet type (packet type, PT), a length (length), a synchronization source of packet sender (SSRC of packet sender), and a synchronization source of media source (SSRC of media source), and feedback control information (feedback control information, FCI). V=2 indicates that a current RTP version is 2, and PT=RTPFB=205 indicates that a data type of the RTCP feedback report is 205, that is, RTP feedback (RTP feedback, RTPFB). As shown in (b) in FIG. 4, the FCI further includes the following parameters: an extended highest sequence number (extended highest sequence number), an ECT(0) counter (Counter), an ECT(1) counter, an ECN-CE counter, a not-ECT counter, a lost packet (lost packets) counter, and a duplication (duplication) counter.

The ECT(0) counter represents a quantity of data packets carrying an ECTO mark, the ECT(1) counter represents a quantity of data packets carrying an ECT1 mark, the ECT-CE counter represents a quantity of data packets carrying a CE mark, the not-ECT counter represents a quantity of data packets carrying no ECN mark, the lost packets counter represents a quantity of lost packets, and the duplication counter represents a quantity of duplicated data packets.

According to the format of the RTP feedback report shown in (a) in FIG. 8, a manner of detecting the first transport layer feedback message from the UE included in a network status information exposure policy includes: If a PT field in a packet from the UE is 205, the packet is the RTCP feedback report, that is, the packet is the first transport layer feedback message.

Further, a manner of adding the network status information indicating the network status to the first transport layer feedback message includes: modifying a value of a counter, or assigning a value to a counter, so that the counter indicates the network status of the to-be-monitored service flow. The counter includes one or more of the following counters: an ECT(0) counter, an ECT(1) counter, an ECN-CE counter, a not-ECT counter, a lost packets counter, or a duplication counter.

S703. The PCF sends the PCC rule to the SMF. Correspondingly, the SMF receives the PCC rule from the PCF.

For S703, refer to the descriptions of S303 in the method 300.

S704. The SMF sends the monitoring configuration information to the RAN. Correspondingly, the RAN receives the monitoring configuration information from the SMF.

For S704, refer to the descriptions of S304 in the method 300.

Optionally, if the SMF receives the network status information exposure policy from the PCF, the method 700 further includes S705.

S705. The SMF sends the network status information exposure rule to the UPF. Correspondingly, the UPF receives the network status information exposure rule from the SMF.

For S705, refer to the descriptions of S305 in the method 300.

Optionally, if the UPF receives the indication information #2 from the SMF, the method 700 further includes S706 to S709.

S706. The UPF receives downlink session description protocol (session description protocol, SDP) information from the AS. Correspondingly, the AS sends the downlink SDP information to the UPF.

The downlink SDP information is used by the AS and the UE to negotiate whether to support the capability of exposing the network status information by using the transport layer.

Optionally, in S706, the UPF may determine, based on the downlink SDP information, whether the AS supports the capability of exposing the network status information by using the transport layer. If the downlink SDP information includes a parameter "ecn-capable-rtp", the UPF determines that the AS supports the capability of exposing the network status information by using the transport layer. Otherwise, the UPF determines that the AS does not support the capability of exposing the network status information by using the transport layer.

S707. The UPF sends the downlink SDP information to the UE. Correspondingly, the UE receives the downlink SDP information from the UPF.

S708. The UE sends uplink SDP information #1 to the UPF. Correspondingly, the UPF receives the uplink SDP information #1 from the UE.

After receiving the downlink SDP information, the UE sends the uplink SDP information #1 (an example of a first transport layer data packet) to the UPF. The uplink SDP information #1 is used by the AS and the UE to negotiate whether to support the capability of exposing the network status information by using the transport layer.

S709. The UPF sends uplink SDP information #2 to the AS. Correspondingly, the AS receives the uplink SDP information #2 from the UPF.

Specifically, the UPF sends the uplink SDP information #2 (an example of a second transport layer data packet) to the AS based on the uplink SDP information #1, where the uplink SDP information #2 includes indication information indicating that exposure of the network status information by using the transport layer is supported. Correspondingly, the AS determines, based on the indication information that is included in the uplink SDP information #2 and indicates that exposure of the network status information by using the transport layer is supported, that the UE supports the capability of exposing the network status information by using the transport layer. It should be understood that, that the AS determines that the UE supports the capability of exposing the network status information by using the transport layer does not mean that the UE actually supports the capability of exposing the network status information by using the transport layer, but the AS considers that the UE supports the capability of exposing the network status information by using the transport layer.

The indication information that is included in the uplink SDP information #2 and indicates that exposure of the network status information by using the transport layer is supported is a parameter "ecn-fb-nack-param = /ecn-fb-par & ecn-fb-par = SP "ecn"". To be specific, when the UPF sends the uplink SDP information #2 to the AS based on the uplink SDP information #1, the UPF adds the parameter "ecn-fb-nack-param = /ecn-fb-par & ecn-fb-par = SP "ecn"" to the uplink SDP information #1, to generate the uplink SDP information #2, and sends the uplink SDP information #2 to the AS.

Optionally, before the UPF sends the uplink SDP information #2 to the AF, the UPF determines, based on the uplink SDP information #1, whether the UE supports the capability of exposing the network status information by using the transport layer, that is, the UPF determines whether the uplink SDP information #1 includes the parameter "ecn-fb-nack-param = /ecn-fb-par & ecn-fb-par = SP "ecn"". If the uplink SDP information #1 includes the foregoing parameter, the UPF determines that the UE supports the capability of exposing the network status information by using the transport layer, and the UPF directly forwards the uplink SDP information #1 to the AS, that is, the uplink SDP information #2 is the uplink SDP information # 1. If the uplink SDP information #1 does not include the foregoing parameter, the UPF adds the foregoing parameter to the uplink SDP information #1, to generate the uplink SDP information #2.

S710. The RAN sends the network status information to the UPF. Correspondingly, the UPF receives the network status information from the RAN.

For S710, refer to the descriptions of S309 in the method 300.

S711. The UPF receives at least one data packet from the AS. Correspondingly, the AS sends the at least one data packet to the UPF.

It should be noted that the at least one data packet is a data packet in the to-be-monitored service flow, and the at least one data packet may be received by the UPF before receiving the network status information, at a moment when the network status information is received, or after receiving the network status information.

S712. The UPF determines an ECN mark of the at least one data packet.

For S712, refer to the descriptions of S613 in the method 600.

It should be noted that, if the UPF receives the network status information of the to-be-monitored service flow from the RAN before receiving the at least one data packet or at a moment when receiving the at least one data packet, the UPF may determine the ECN mark of the at least one data packet, so that after receiving an RTCP feedback report #1 from the UE, the UPF sends an RTCP feedback report #2 to the AS based on the network status information of the to-be-monitored service flow and the ECN mark of the at least one data packet.

It should be further noted that, if the AS determines, based on the received uplink SDP information #2, that the UE supports the capability of feeding back the network status information by using the transport layer, the AS adds the ECN mark to the at least one data packet, to indicate that the AS supports the capability of feeding back the network status information by using the transport layer, or indicate network congestion. For example, if the ECN mark carried in the at least one data packet is an ECT0 mark or an ECT1 mark, the at least one data packet may indicate that the AS supports a capability of feeding back the network status information by using the transport layer. If the at least one data packet includes a data packet carrying a CE mark, the at least one data packet indicates network congestion.

S713. The UPF sends the at least one data packet to the UE. Correspondingly, the UE receives the at least one data packet.

S714. The UE sends the RTCP feedback report #1 to the UPF. Correspondingly, the UPF receives the RTCP feedback report #1 from the UE.

After receiving the at least one data packet, the UE sends the RTCP feedback report #1 (an example of the first transport layer feedback message) to the UPF. Correspondingly, after the UPF sends the at least one data packet to the UE, if a PT field in a packet received from the UE is 205, the UPF determines that the packet is the RTCP feedback report #1.

Optionally, if the UE supports the capability of exposing the network status information by using the transport layer, the UE may determine the ECN mark of the at least one data packet, and feed back the ECN mark of the at least one data packet based on the RTCP feedback report #1. As described in S702, the UE may assign a value to a counter of the RTCP feedback report #1, so that the RTCP feedback report #1 may indicate the ECN mark of the at least one data packet. The counter includes one or more of the following counters: an ECT(0) counter, an ECT(1) counter, an ECN-CE counter, and a not-ECT counter. For example, based on the ECN mark of the at least one data packet, the UE assigns 10 to the ECT(0) counter and the ECT(1) counter, assigns 0 to the ECT-CE counter, and assigns 0 to the not-ECT counter.

Optionally, if the UE detects a packet loss and/or duplicated packet receiving, the UE may assign a value to the lost packets counter based on a packet loss status, and assign a value to the duplication counter based on a duplicated packet receiving situation.

It should be noted that the RTCP feedback report #1 is received by the UPF at a moment when receiving the network status information of the to-be-monitored service flow, or the RTCP feedback report #1 is received by the UPF after receiving the network information of the to-be-monitored service flow.

S715. The UPF generates, based on the network status information of the to-be-monitored service flow, the information indicating the network status.

The information indicating the network status includes at least one of the following: the quantity of data packets carrying the CE mark, the quantity of data packets carrying the ECT1 mark, the quantity of data packets carrying the ECT0 mark, the quantity of data packets carrying no ECN mark, the quantity of lost packets, or the quantity of repeatedly received data packets.

Specifically, the information that is generated by the UPF and indicates the network status meets the following condition: A ratio of a quantity that is of data packets carrying the CE mark and that is determined based on the information indicating the network status to a quantity of the at least one data packet is for representing the network status of the to-be-monitored service flow; or a ratio of a quantity of lost packets that is determined based on the information indicating the network status to a quantity of the at least one data packet is for representing the network status of the to-be-monitored service flow. The network status of the to-be-monitored service flow is determined based on the network status information of the to-be-monitored service flow.

For example, if it is determined, based on the network status information of the to-be-monitored service flow, that a congestion degree of the to-be-monitored service flow is 60%, the information that is generated by the UPF and that indicates the network status meets the following condition: The ratio of the quantity that is of data packets carrying the CE mark and that is determined based on the information indicating the network status to the quantity of the at least one data packet is 60%; or the ratio of the quantity of lost packets that is determined based on the information indicating the network status to the quantity of the at least one data packet is 60%.

For example, when the at least one data packet includes 20 data packets, the information that is generated by the UPF and that indicates the network status includes that the quantity of data packets carrying the CE mark is 12. Alternatively, the information that is generated by the UPF and that indicates the network status includes: The quantity of data packets carrying the ECT1 mark is 8; and when a remaining data packet is a data packet carrying the CE mark by default, it may be determined, based on the information indicating the network status, that the quantity of data packets carrying the CE mark is 12. Alternatively, the information that is generated by the UPF and that indicates the network status includes: that the quantity of lost packets is 12. Alternatively, the information that may be generated by the UPF and that indicates the network status includes: The quantity of lost packets is 12, and both the quantity of data packets #2 carrying the ECT1 mark and the quantity of data packets the ECT0 mark are 4.

Optionally, if S712 is performed in the method 700, or the RTCP feedback includes #1 indicates the ECN mark of the at least one data packet, the UPF generates, based on the ECN mark of the at least one data packet and the network status information of the to-be-monitored service flow, the information indicating the network status.

For example, it is assumed that the congestion degree of the to-be-monitored service flow is determined to be 60% based on the network status information of the to-be-monitored service flow, and that the ECN mark of the at least one data packet is: The quantity of data packets carrying the CE mark is 0, both the quantity of data packets carrying the ECT1 mark and the quantity of data packets carrying the ECT0 mark are 10, and the quantity of data packets carrying no ECN mark is 0. Further, the information that is generated by the UPF and that indicates the network status meets the following condition: The ratio of the quantity that is of data packets carrying the CE mark and that is determined based on the information indicating the network status to the quantity of the at least one data packet is 60%; or the ratio of the quantity of lost packets that is determined based on the information indicating the network status to the quantity of the at least one data packet is 60%.

For example, the information that is generated by the UPF and that indicates the network status includes: The quantity of data packets carrying the CE mark is 12, both the quantity of data packets carrying the ECT1 mark and the quantity of data packets carrying the ECT0 mark are 4, and the quantity of data packets carrying no ECN mark is 0. Alternatively, the information that is generated by the UPF and used to indicate the network status includes: The quantity of lost packets is 12, the quantity of data packets carrying the ECT1 mark is 0, the quantity of data packets carrying the ECT0 mark is 8, and the quantity of data packets carrying no ECN mark is 0.

S716. The UPF sends the RTCP feedback report #2 to the AS. Correspondingly, the AS receives the RTCP feedback report #2 from the UPF.

The UPF sends the RTCP feedback report #2 to the AS based on the RTCP feedback report #1, where the RTCP feedback report #2 includes the information indicating the network status of the to-be-monitored service flow.

In a possible implementation, if the UE does not support the capability of exposing the network status information by using the transport layer, the counter in the RTCP feedback report #2 sent by the UE to the UPF has no value or has a value of 0. The counter includes one or more of the following counters: an ECT(0) counter, an ECT(1) counter, an ECN-CE counter, a not-ECT counter, a lost packets counter, or a duplication counter. Then, the UPF assigns a value to the counter based on the generated information indicating the network status, to generate the RTCP feedback report #2. In other words, the UPF adds, to the RTCP feedback report #1, the information indicating the network status, to generate the RTCP feedback report #2.

For example, if the information that is generated by the UPF and that indicates the network status includes that the quantity of data packets carrying the CE mark is 12, the UPF assigns a value 12 to the ECT-CE counter in the RTCP feedback report #1, to generate the RTCP feedback report #2. For another example, if the information that is generated by the UPF and that indicates the network status includes: The quantity of lost packets is 12, and both the quantity of data packets #2 carrying the ECT1 mark and the quantity of data packets #carrying the ECT0 mark are 4, the UPF assigns a value 4 to both the ECT(0) counter and the ECT(1) counter in the RTCP feedback report #1, and assigns a value 12 to the lost packets counter, to generate the RTCP feedback report #2.

In a possible implementation, if the UE supports the capability of exposing the network status information by using the transport layer, the counter in the RTCP feedback report #1 sent by the UE to the UPF has a value. Then, the UPF modifies a value of the counter based on the generated information indicating the network status, to generate the RTCP feedback report #2. In other words, the UPF modifies some fields in the RTCP feedback report #1, to generate the RTCP feedback report #2.

For example, if values of the ECT(0) counter, the ECT (1) counter, the ECN-CE counter, the not-ECT counter, the lost packets counter, and the duplication counter in the RTCP feedback report #1 are 10, 10, 0, 0, 0, 0, and 0 respectively, the information that is generated by the UPF and that indicates the network status includes: The quantity of data packets carrying the CE mark is 12, and both the quantity of data packets carrying the ECT1 mark and the quantity of data packets carrying the ECT0 mark are 4. In this case, the UPF changes values of the ECT(0) counter, the ECT(1) counter, and the ECN-CE counter in the RTCP feedback report #1 to 4, 4, and 12 respectively, to generate the RTCP feedback report #2.

After receiving the RTCP feedback report #2 from the UPF, the AS may determine the network status of the to-be-monitored service flow based on the information that is included in the RTCP feedback report #2 and that indicates the network status.

For example, the information that is included in the RTCP feedback report #2 and that indicates the network status includes: The quantity of data packets carrying the CE mark is 12, that is, a value of ECT-CE counter in the RTCP feedback report #2 is 12. When the AS determines that the RTCP feedback report #2 corresponds to the at least one data packet, the AS determines the congestion degree of the to-be-monitored service flow based on a ratio of the quantity (12) of data packets carrying the CE mark to the quantity (20) of the at least one data packet.

For another example, the information that is included in the RTCP feedback report #2 and that indicates the network status includes: The quantity of lost packets is 12, both the quantity of data packets carrying the ECT1 mark and the quantity of data packets carrying the ECT0 mark are 4, the quantity of data packets carrying the CE mark is 0, the quantity of data packets carrying no ECN mark is 0, and the quantity of repeatedly received data packets is 0. That is, the values of the ECT(0) counter, ECT(1) counter, the ECN-CE counter, the not-ECT counter, the lost packets counter, and the duplication counter in the RTCP feedback report #2 are 4, 4, 0, 0, 12, and 0 respectively. In this case, the AS may determine, based on the values of the counters, that the quantity of the at least one data packet is 20 and the quantity of lost packets is 12, and further determine that a packet loss rate (or the congestion degree) of the to-be-monitored service flow is 60%.

It should be noted that, except one or more of the ECT(0) counter, the ECT(1) counter, the ECN-CE counter, the not-ECT counter, the lost packets counter, and the duplication counter, other fields of the RTCP feedback report #1 and the RTCP feedback report #2 are the same.

Further, when determining the network status of the to-be-monitored service flow based on the RTCP feedback report #2, the AS may adjust the service parameter of the to-be-monitored service flow based on the network status of the to-be-monitored service flow, for example, dynamically adjust a media coding configuration to change a bit rate, to ensure service experience of a user and improve effective utilization of network resources.

It should be understood that in the method shown in FIG. 7, the sequence numbers of the processes do not mean an order of execution, and the order of execution of the processes should be determined according to functions and internal logic thereof, and should not constitute any limitation on the implementation processes of embodiments of this application. For example, S710 may be performed before S711, or may be performed after S714, or S710 may be performed between S711 and S714.

In this embodiment of this application, when the transport layer protocol used for the to-be-monitored service flow is the RTP or RTCP protocol, if the UPF obtains the network status information of the to-be-monitored service flow, the UPF generates, based on the network status information of the to-be-monitored service flow, the information indicating the network status of the to-be-monitored service flow. Further, after receiving the RTCP feedback report #1 from the UE, the UPF assigns a value to one or more counters in the RTCP feedback report #1 based on the information indicating the network status, or modifies a value of one or more counters, to generate the RTCP feedback report #2, so that the RTCP feedback report #2 includes the information indicating the network status of the to-be-monitored service flow. Therefore, the application server may determine the network status of the to-be-monitored service flow based on the RTCP feedback report #2. According to the method provided in this embodiment of this application, even if the UE does not support ECN feedback by using RTP or RTCP, the network status of the to-be-monitored service flow can be exposed to the AS by using RTP or RTCP, so that the AS adjusts the service parameter of the to-be-monitored service flow based on the network status of the to-be-monitored service flow, for example, dynamically adjusts a media coding configuration to change bit rate, to ensure service experience of a user and improve effective utilization of network resources.

Based on the method shown in FIG. 3, FIG. 6, or FIG. 7, the network status information of the to-be-monitored service flow may be exposed to the application server by using the transport layer without considering a capability of the terminal device. When the terminal device supports the capability of exposing the network status information by using the transport layer, the terminal device may expose the network status information of the to-be-monitored service flow to the application server by using the transport layer according to a method shown in FIG. 9.

FIG. 9 is a schematic flowchart of a communication method according to an embodiment of this application. The following describes in detail steps included in the method 900.

S901. An AF sends indication information #1 to a PCF. Correspondingly, the PCF receives the indication information #1 from the AF.

For descriptions of the indication information #1, refer to S301 in the method 300.

S902. The PCF generates a PCC rule.

The PCC rule includes a monitoring policy of a to-be-monitored service flow. The monitoring policy of the to-be-monitored service flow is for determining monitoring configuration information of the to-be-monitored service flow. For the monitoring configuration information, refer to the descriptions of S210 in the method 200. For the monitoring policy, refer to the descriptions of S210 in the method 200 and S302 in the method 300.

Optionally, the PCC rule further includes a network status information exposure policy, and the network status information exposure policy includes one or more of the following: a manner of receiving network status information of the to-be-monitored service flow from a RAN, or indication information indicating to add a CE tag to at least one data packet based on the network status information of the to-be-monitored service flow. The at least one data packet is a data packet in the to-be-monitored service flow.

S903. The PCF sends the PCC rule to an SMF. Correspondingly, the SMF receives the PCC rule from the PCF.

For S903, refer to the descriptions of S303 in the method 300.

S904. The SMF sends the monitoring configuration information to the RAN. Correspondingly, the RAN receives the monitoring configuration information from the SMF.

For S904, refer to the descriptions of S304 in the method 300.

Optionally, if the SMF receives the network status information exposure policy from the PCF, the method 900 further includes S905.

S905. The SMF sends a network status information exposure rule to the UPF. Correspondingly, the UPF receives the network status information exposure rule from the SMF.

The network status information exposure rule includes: a manner of receiving the network status information of the to-be-monitored service flow from the RAN, or indication information indicating the external exposure rule.

For more descriptions of S905, refer to S305 in the method 300.

S906. The RAN sends the network status information to the UPF. Correspondingly, the UPF receives the network status information from the RAN.

For S906, refer to S309 in the method 300.

It should be noted that the method 900 is described by using an example in which the UPF receives the network status information of the to-be-monitored service flow from the RAN. If the UPF receives the monitoring configuration information of the to-be-monitored service flow, the UPF may further monitor a network status of the to-be-monitored service flow based on the monitoring configuration information, to obtain the network status information of the to-be-monitored service flow.

S907. The AS sends the at least one data packet to the UPF. Correspondingly, the UPF receives the at least one data packet from the AS.

The at least one data packet is a data packet in the to-be-monitored service flow, and the at least one data packet may be received by the UPF at a moment when the UPF receives the network status information of the to-be-monitored service flow, or may be received after the UPF receives the network status information of the to-be-monitored service flow.

S908. The UPF adds the CE mark to the at least one data packet based on the network status information.

In a possible implementation, after receiving the network status information of the to-be-monitored service flow and the at least one data packet, the UPF adds the CE mark to the at least one data packet based on the network status information of the to-be-monitored service flow.

In another possible implementation, if the network status information exposure rule received by the UPF includes the indication information indicating to add the CE mark to the at least one data packet based on the network status information of the to-be-monitored service flow, after receiving the network status information of the to-be-monitored service flow and the at least one data packet, the UPF adds the CE mark to the at least one data packet based on the network status information of the to-be-monitored service flow.

For example, the UPF adds the CE mark to an IP header of the at least one data packet, to be specific, the UPF sets an ECN field in the IP header of the at least one data packet to "11".

For example, the UPF occasionally adds the CE mark to the at least one data packet based on the network status information of the to-be-monitored service flow. A probability that the UPF adds the CE mark to the at least one data packet is determined based on the network status information of the to-be-monitored service flow. For example, if the UPF determines, based on the network status information, that the to-be-monitored service flow is not congested, the UPF adds the CE mark to none of the at least one data packet. In other words, the probability that the UPF adds the CE mark to the at least one data packet is 0. For another example, if the UPF determines, based on the network status information, that the to-be-monitored service flow is congested, the UPF adds the CE mark to each of the at least one data packet. In other words, the probability that the UPF adds the CE mark to the at least one data packet is 100%. For another example, if the UPF determines, based on congestion information, that a congestion degree of the to-be-monitored service flow is 60%, the UPF randomly adds the CE mark to 60% of the at least one data packet. In other words, the probability that the UPF adds the CE mark to the at least one data packet is 60%.

For example, the at least one data packet includes 20 data packets. If the UPF determines, based on the network status information, that the congestion degree of the to-be-monitored service flow is 60%, the UPF randomly adds the CE mark to 12 data packets.

S909. The UPF sends the at least one data packet to the UE. Correspondingly, the UE receives the at least one data packet from the UPF.

S910. The UE sends a transport layer feedback message to the AS. Correspondingly, the AS receives the transport layer feedback message from the UE.

After receiving the at least one data packet from the UPF, the UE determines an ECN mark of the at least one data packet by parsing an IP layer of the at least one data packet, and sends the transport layer feedback message including the ECN mark of the at least one data packet to the AS.

For example, if a transport layer protocol used for the to-be-monitored service flow is TCP, the UE collects statistics on a quantity of data packets carrying the CE mark and a quantity of payload octets in the data packet carrying the CE mark, a quantity of payload octets in the data packet carrying the ECT1 mark, and a quantity of payload octets in the data packet carrying the ECT0 mark in the at least one data packet. Then, the UE assigns values to r.cep, r.ceb, r.elb, and r.e0b in a TCP ACK based on a statistical result, and sends the TCP ACK to the AS.

For example, if a transport layer protocol used for the to-be-monitored service flow is the QUIC protocol, the UE collects statistics on a quantity of data packets carrying the CE mark, a quantity of data packets carrying the ECT1 mark, and a quantity of data packets carrying the ECT0 mark in the at least one data packet. Then, the UE assigns values to the ECT0 count, the ECT1 count, and the ECT-CE count in the QUIC ACK based on a statistical result, and sends the QUIC ACK to the AS.

For example, if the transport layer protocol used for the to-be-monitored service flow is RTP or RTCP, the UE collects statistics on a quantity of data packets carrying the CE mark, a quantity of data packets carrying the ECT1 mark, a quantity of data packets carrying the ECT0 mark, a quantity of data packets carrying no ECN mark, a quantity of lost packets, and a quantity of duplicated data packets in the at least one data packet. Further, after assigning values to the ECT(0) counter, the ECT(1) counter, the ECT-CE counter, the not-ECT counter, the lost packets counter, and the duplication counter in the RTCP feedback report based on a statistical result, the UE sends the RTCP feedback report to the AS.

After receiving the transport layer feedback message, the AS may determine the network status of the to-be-monitored service flow based on the transport layer feedback message. For a manner in which the AS determines the network status of the to-be-monitored service flow based on the transport layer feedback message, refer to S315 in the method 300, S617 in the method 600, and S716 in the method 700.

In this embodiment of this application, if the UPF obtains the network status information of the to-be-monitored service flow, the UPF adds the CE mark to the at least one data packet based on the network status information of the to-be-monitored service flow, and sends the at least one data packet to the UE. Further, the UE collects statistics on the ECN mark of the at least one data packet, and feeds back the statistical result to the AS by using the transport layer feedback message, so that the AS can determine the network status of the to-be-monitored service flow based on the ECN mark of the at least one data packet. In this way, the AS can adjust a service parameter of the to-be-monitored service flow based on the network status of the to-be-monitored service flow, for example, dynamically adjust a media coding configuration to change a bit rate, to ensure service experience of a user and improve effective utilization of network resources.

In addition, according to the method provided in this embodiment of this application, the RAN may send the network status information of the to-be-monitored service flow to the UPF, and then the UPF exposes the network status information to the AS by adding the CE mark to the at least one data packet. Compared with a manner in which the RAN exposes the network status information by adding an ECN mark to an IP header of a downlink data packet, this application provides higher security because the RAN does not need to parse the IP header of the downlink data packet.

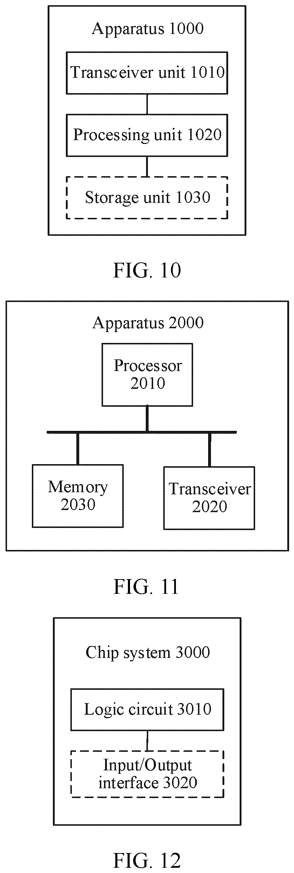

FIG. 10 is a schematic block diagram of a communication apparatus 1000 according to an embodiment of this application. As shown in FIG. 10, the communication apparatus 1000 may include a transceiver unit 1010 and a processing unit 1020.

In a possible design, the communication apparatus 1000 may be the user plane network element in the foregoing method embodiments, or may be a chip configured to implement a function of the user plane network element in the foregoing method embodiments.

It should be understood that the communication apparatus 1000 may correspond to the user plane network element in the method 200, the method 300, the method 600, the method 700, or the method 900 in embodiments of this application. The communication apparatus 1000 may include units configured to perform a method performed by the user plane network element in the method 200 in FIG. 2, the method 300 in FIG. 3, the method 600 in FIG. 6, the method 700 in FIG. 7, or the method 900 in FIG. 9. In addition, the units in the communication apparatus 1000 and the foregoing other operations and/or functions are respectively configured to implement corresponding procedures of the method 200 in FIG. 2, the method 300 in FIG. 3, the method 600 in FIG. 6, the method 700 in FIG. 7, or the method 900 in FIG. 9. It should be understood that a specific process in which the units perform the foregoing corresponding steps is described in detail in the foregoing method embodiments. For brevity, details are not described herein again.

In another possible design, the communication apparatus 1000 may be the session management network element in the foregoing method embodiments, or may be a chip configured to implement a function of the session management network element in the foregoing method embodiments.

It should be understood that the communication apparatus 1000 may correspond to the session management network element in the method 200, the method 300, the method 600, the method 700, or the method 900 in embodiments of this application. The communication apparatus 1000 may include units configured to perform a method performed by the session management network element in the method 200 in FIG. 2, the method 300 in FIG. 3, the method 600 in FIG. 6, the method 700 in FIG. 7, or the method 900 in FIG. 9. In addition, the units in the communication apparatus 1000 and the foregoing other operations and/or functions are respectively configured to implement corresponding procedures of the method 200 in FIG. 2, the method 300 in FIG. 3, the method 600 in FIG. 6, the method 700 in FIG. 7, or the method 900 in FIG. 9. It should be understood that a specific process in which the units perform the foregoing corresponding steps is described in detail in the foregoing method embodiments. For brevity, details are not described herein.

In another possible design, the communication apparatus 1000 may be the policy control function network in the foregoing method embodiments, or may be a chip configured to implement a function of the policy control function network in the foregoing method embodiments.

It should be understood that the communication apparatus 1000 may correspond to the policy control function network element in the method 200, the method 300, the method 600, the method 700, or the method 900 in embodiments of this application. The communication apparatus 1000 may include units configured to perform a method performed by the policy control function network element in the method 200 in FIG. 2, the method 300 in FIG. 3, the method 600 in FIG. 6, the method 700 in FIG. 7, or the method 900 in FIG. 9. In addition, the units in the communication apparatus 1000 and the foregoing other operations and/or functions are respectively configured to implement corresponding procedures of the method 200 in FIG. 2, the method 300 in FIG. 3, the method 600 in FIG. 6, the method 700 in FIG. 7, or the method 900 in FIG. 9. It should be understood that a specific process in which the units perform the foregoing corresponding steps is described in detail in the foregoing method embodiments. For brevity, details are not described herein.

In another possible design, the communication apparatus 1000 may be the application server in the foregoing method embodiments, or may be a chip configured to implement a function of the application server in the foregoing method embodiments.

It should be understood that the communication apparatus 1000 may correspond to the application server in the method 200, the method 300, the method 600, the method 700, or the method 900 in embodiments of this application. The communication apparatus 1000 may include units configured to perform a method performed by the application server in the method 200 in FIG. 2, the method 300 in FIG. 3, the method 600 in FIG. 6, the method 700 in FIG. 7, or the method 900 in FIG. 9. In addition, the units in the communication apparatus 1000 and the foregoing other operations and/or functions are respectively configured to implement corresponding procedures of the method 200 in FIG. 2, the method 300 in FIG. 3, the method 600 in FIG. 6, the method 700 in FIG. 7, or the method 900 in FIG. 9. It should be understood that a specific process in which the units perform the foregoing corresponding steps is described in detail in the foregoing method embodiments. For brevity, details are not described herein.

It should be further understood that the transceiver unit 1010 or the processing unit 1020 in the communication apparatus 1000 may be referred to as an obtaining unit, or a unit in which the transceiver unit 1010 and the processing unit 1020 are integrated is referred to as an obtaining unit.

It should be further understood that the transceiver unit 1010 in the communication apparatus 1000 may correspond to a transceiver 2020 in a communication device 2000 shown in FIG. 11, and the processing unit 1020 in the communication apparatus 1000 may correspond to a processor 2010 in the communication device 2000 shown in FIG. 11.

It should be further understood that when the communication apparatus 1000 is a chip, the chip includes a transceiver unit. Optionally, the chip may further include a processing unit. The transceiver unit may be an input/output circuit or a communication interface. The processing unit may be a processor, a microprocessor, or an integrated circuit that is integrated on the chip.

The transceiver unit 1010 is configured to implement signal receiving and sending operations of the communication apparatus 1000, and the processing unit 1020 is configured to implement a signal processing operation of the communication apparatus 1000.

Optionally, the communication apparatus further includes a storage unit 1030, and the storage unit 1030 is configured to store instructions.

FIG. 11 is a schematic block diagram of a communication device 2000 according to an embodiment of this application. As shown in FIG. 11, the communication device 2000 includes at least one processor 2010 and a transceiver 2020. The processor 2010 is coupled to a memory, and is configured to execute instructions stored in the memory, to control the transceiver 2020 to send a signal and/or receive a signal. Optionally, the communication device 2000 further includes a memory 2030, configured to store instructions.

It should be understood that the processor 2010 and the memory 2030 may be integrated into one processing apparatus. The processor 2010 is configured to execute program code stored in the memory 2030 to implement the foregoing functions. During specific implementation, the memory 2030 may also be integrated into the processor 2010, or may be independent of the processor 2010.

It should be further understood that the transceiver 2020 may include a receiver (or referred to as a receiver machine) and a transmitter (or referred to as a transmitter machine). The transceiver 2020 may further include an antenna. There may be one or more antennas. The transceiver 2020 may also be an antenna interface or an interface circuit.

When the communication device 2000 is a chip, the chip includes a transceiver unit and a processing unit. The transceiver unit may be an input/output circuit or a communication interface. The processing unit may be a processor, a microprocessor, or an integrated circuit that is integrated on the chip.

FIG. 12 is a schematic diagram of a chip system according to an embodiment of this application. The chip system herein may also be a system including a circuit. The chip system 3000 shown in FIG. 12 includes a logic circuit 3010 and an input/output interface (input/output interface) 3020. The logic circuit is configured to be coupled to the input interface, and transmit data through the input/output interface, to perform the method in FIG. 2, FIG. 3, FIG. 6, FIG. 7, or FIG. 9.

An embodiment of this application further provides a processing apparatus, including a processor and an interface. The processor may be configured to perform the method in the foregoing method embodiments.

It should be understood that the processing apparatus may be a chip. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller unit (micro controller unit, MCU), a programmable controller (programmable logic device, PLD), or another integrated chip.

In an implementation process, steps in the foregoing methods can be implemented by using a hardware integrated logical circuit in the processor, or by using instructions in a form of software. The steps of the methods disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and performs the steps in the foregoing method in combination with the hardware in the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general purpose processor, a digital signal processor (DSP), an application specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache.

According to the methods provided in embodiments of this application, this application further provides a computer program product. The computer program product includes computer program code. When the computer program code is run on a computer, the computer is enabled to perform the method in any one of embodiments shown in FIG. 2, FIG. 3, FIG. 6, FIG. 7, or FIG. 9.

According to the methods provided in embodiments of this application, this application further provides a computer-readable storage medium. The computer-readable storage medium stores program code. When the program code is run on a computer, the computer is enabled to perform the method in any one of embodiments shown in FIG. 2, FIG. 3, FIG. 6, FIG. 7, or FIG. 9.

According to the methods provided in embodiments of this application, this application further provides a system. The system includes the foregoing application server and the foregoing user plane network element. Optionally, the system further includes the foregoing session management network element. Optionally, the system further includes the foregoing policy control network element.

In the foregoing embodiments, all or a part of the software, hardware, firmware, or any combination thereof may be implemented. When the software is used for implementation, all or a part of the implementation may be implemented in a form of a computer program product. The computer program product includes one or more computer instructions. When the computer instructions are loaded and executed on the computer, the procedures or functions according to embodiments of this application are all or partially generated. The computer instructions may be stored in a computer-readable storage medium, or transmitted from one computer-readable storage medium to another computer-readable storage medium. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid-state drive (solid-state drive, SSD)), or the like.

In the several embodiments mentioned in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining, by a user plane network element, network status information of a to-be-monitored service flow;
receiving, by the user plane network element, a first transport layer feedback message from a terminal device, wherein the first transport layer feedback message corresponds to at least one data packet in the to-be-monitored service flow; and
sending, by the user plane network element, a second transport layer feedback message to an application server based on the first transport layer feedback message, wherein the second transport layer feedback message comprises information indicating a network status of the to-be-monitored service flow.

2. The method according to claim 1, wherein the method further comprises:
generating, by the user plane network element based on the network status information of the to-be-monitored service flow and an explicit congestion notification ECN mark of the at least one data packet, the information indicating the network status of the to-be-monitored service flow.

3. The method according to claim 2, wherein the method further comprises:
receiving, by the user plane network element, the at least one data packet from the application server; and
determining, by the user plane network element, the ECN mark of the at least one data packet.

4. The method according to claim 2, wherein the method further comprises:
obtaining, by the user plane network element, the ECN mark of the at least one data packet from the first transport layer feedback message.

5. The method according to any one of claims 1 to 4, wherein a transport layer protocol used for the to-be-monitored service flow is the transmission control protocol, and the information indicating the network status information of the to-be-monitored service flow comprises at least one of the following: a quantity of data packets carrying a congestion experienced CE mark, a quantity of payload octets of the data packets carrying the CE mark, a quantity of payload octets of data packets carrying an explicit congestion notification capable transport ECT1 mark, or a quantity of payload octets of data packets carrying an ECT0 mark.

6. The method according to any one of claims 1 to 4, wherein a transport layer protocol used for the to-be-monitored service flow is the quick user datagram protocol internet connection protocol, and the information indicating the network information of the to-be-monitored service flow comprises at least one of the following: a quantity of data packets carrying a CE mark, a quantity of data packets carrying an ECT1 mark, or a quantity of data packets carrying an ECT0 mark.

7. The method according to any one of claims 1 to 4, wherein a transport layer protocol used for the to-be-monitored service flow is the real-time transport protocol or the real-time transport control protocol, and the information indicating the network information of the to-be-monitored service flow comprises at least one of the following: a quantity of data packets carrying an ECT1 mark, a quantity of data packets carrying an ECT0 mark, a quantity of data packets carrying a CE mark, a quantity of lost packets, a quantity of repeatedly received data packets, or a quantity of data packets carrying no ECN mark.

8. The method according to any one of claims 1 to 7, wherein the method further comprises:
receiving, by the user plane network element, a first transport layer data packet from the terminal device, wherein the first transport layer data packet corresponds to the to-be-monitored service flow; and
sending, by the user plane network element, a second transport layer data packet to the application server based on the first transport layer data packet, wherein the second transport layer data packet comprises indication information indicating that feedback of the network status information by using a transport layer is supported.

9. The method according to claim 8, wherein the method further comprises:
determining, by the user plane network element, that the first transport layer data packet comprises indication information indicating that feedback of the network status information by using the transport layer is not supported.

10. The method according to any one of claims 1 to 9, wherein the method further comprises:
when the application server supports a capability of exposing the network status information by using the transport layer, generating, by the user plane network element based on the network status information of the to-be-monitored service flow, the information indicating the network status of the to-be-monitored service flow.

11. The method according to claim 10, wherein the method further comprises:
receiving, by the user plane network element, a TCP connection establishment message from the application server; and
determining, by the user plane network element based on values of three bits: an accurate ECN bit, a congestion window reduced bit, and an ECN echo bit in a TCP header of the TCP connection establishment message, that the application server supports the capability of exposing the network status information by using the transport layer.

12. The method according to claim 10, wherein the method further comprises:
receiving, by the user plane network element, a data packet from the application server; and
determining, by the user plane network element based on a value of an ECN field in an internet protocol IP header of the data packet, that the application server supports the capability of exposing the network status information by using the transport layer.

13. The method according to claim 10, wherein the method further comprises:
receiving, by the user plane network element, downlink session description protocol information from the application server; and
determining, by the user plane network element based on the downlink session description protocol information, that the application server supports the capability of exposing the network status information by using the transport layer.

14. The method according to any one of claims 1 to 13, wherein the method further comprises:
receiving, by the user plane network element, a network status information exposure rule from a session management network element, wherein the network status information exposure rule is for determining a manner of exposing the network status information of the to-be-monitored service flow by using the transport layer.

15. The method according to claim 14, wherein the network status information exposure rule comprises one or more of the following: indication information indicating to intervene in a transport layer capability negotiation procedure between the terminal device and the application server, indication information indicating the transport layer protocol used for the to-be-monitored service flow, a manner of receiving the network status information of the to-be-monitored service flow from an access network device, a manner of detecting the first transport layer feedback message, or a manner of adding the information indicating the network status information of the to-be-monitored service flow to the first transport layer feedback message, wherein the transport layer capability negotiation procedure is for determining whether feedback of the network status information by using the transport layer is supported.

16. A communication method, comprising:
receiving, by a policy control function network element from an application function network element, indication information indicating to externally expose network status information of a to-be-monitored service flow by using a transport layer;
determining, by the policy control function network element, a monitoring policy of the to-be-monitored service flow and a network status information exposure policy based on the indication information indicating to expose the network status information of the to-be-monitored service flow by using the transport layer, wherein the monitoring policy is for determining monitoring configuration information of the to-be-monitored service flow, the monitoring configuration information is for monitoring a network status of the to-be-monitored service flow, the network status information exposure policy is for determining a network status information exposure rule, and the network status information exposure rule is for determining a manner of exposing the network status information of the to-be-monitored service flow by using the transport layer; and
sending, by the policy control function network element, the monitoring policy and the network status information exposure policy to a session management network element.

17. The method according to claim 16, wherein the network status information exposure policy or the network status information exposure rule comprises one or more of the following: indication information indicating to intervene in a transport layer capability negotiation procedure between a terminal device and an application server, indication information indicating a transport layer protocol used for the to-be-monitored service flow, a manner of receiving the network status information of the to-be-monitored service flow from an access network device, a manner of detecting a transport layer feedback message that is from the terminal device, a manner of adding information indicating the network status information of the to-be-monitored service flow to the transport layer feedback message, or indication information indicating to add a congestion experienced CE mark to at least one data packet based on the network status information of the to-be-monitored service flow, wherein the transport layer capability negotiation procedure comprises a procedure of determining whether a capability of feeding back the network status information by using the transport layer is supported.

18. The method according to claim 16 or 17, wherein the method further comprises:
receiving, by the policy control function network element from the application function network element, indication information indicating to intervene in the transport layer capability negotiation procedure between the terminal device and the application server.

19. The method according to any one of claims 16 to 18, wherein the method further comprises:
receiving, by the policy control function network element from the application function network element, the indication information that indicates the transport layer protocol used for the to-be-monitored service flow.

20. A communication method, comprising:
receiving, by a session management network element, a monitoring policy of a to-be-monitored service flow and a network status information exposure policy from a policy control function network element;
sending, by the session management network element, a network status information exposure rule to a user plane network element based on the network status information exposure policy, wherein the network status information exposure rule is for determining a manner of exposing the network status information of the to-be-monitored service flow by using a transport layer; and
sending, by the session management network element, monitoring configuration information of the to-be-monitored service flow to an access network device based on the monitoring policy, wherein the monitoring configuration information is for monitoring a network status of the to-be-monitored service flow.

21. The method according to claim 20, wherein the network status information exposure policy or the network status information exposure rule comprises one or more of the following: indication information indicating to intervene in a transport layer capability negotiation procedure between a terminal device and an application server, indication information indicating a transport layer protocol used for the to-be-monitored service flow, a manner of receiving the network status information of the to-be-monitored service flow from the access network device, a manner of detecting a transport layer feedback message that is from the terminal device, a manner of adding information indicating the network status information of the to-be-monitored service flow to the transport layer feedback message, or indication information indicating to add a congestion experienced CE mark to at least one data packet based on the network status information of the to-be-monitored service flow, wherein the transport layer capability negotiation procedure comprises a procedure of determining whether a capability of feeding back the network status information by using the transport layer is supported.

22. A communication method, comprising:
obtaining, by a user plane network element, network status information of a to-be-monitored service flow; and
sending, by the user plane network element, at least one data packet in the to-be-monitored service flow to a terminal device based on the network status information of the to-be-monitored service flow, wherein a ratio of a quantity of data packets carrying a congestion experienced CE mark in the at least one data packet to a quantity of the at least one data packet is for determining a network status of the to-be-monitored service flow.

23. The method according to claim 22, wherein the method further comprises:
receiving, by the user plane network element, a network status information exposure rule from a session management network element, wherein the network status information exposure rule is for determining a manner of exposing the network status information of the to-be-monitored service flow, and the network status information exposure rule comprises one or more of the following: a manner of receiving the network status information of the to-be-monitored service flow from an access network device, or indication information indicating to add the CE mark to the at least one data packet based on the network status information of the to-be-monitored service flow.

24. A communication apparatus, configured to implement the method according to any one of claims 1 to 23.

25. A communication apparatus, comprising at least one processor, wherein the at least one processor is coupled to at least one memory, and the at least one processor is configured to execute a computer program or instructions stored in the at least one memory, to enable the communication apparatus to implement the method according to any one of claims 1 to 23.

26. A chip, comprising a processor and a communication interface, wherein the communication interface is configured to receive data and/or information and transmit the received data and/or information to the processor, and the processor processes the data and/or the information, to perform the method according to any one of claims 1 to 23.

27. A computer-readable storage medium, wherein the computer-readable storage medium stores a computer program; and when the computer program is executed, a computer is enabled to perform the method according to any one of claims 1 to 23.

28. A computer program product comprising instructions, wherein when the computer program product runs on a computer, the computer is enabled to perform the method according to any one of claims 1 to 23.

29. A communication method, comprising:
obtaining, by a user plane network element, network status information of a to-be-monitored service flow;
sending, by a terminal device, a first transport layer feedback message to the user plane network element, wherein the first transport layer feedback message corresponds to at least one data packet in the to-be-monitored service flow; and
sending, by the user plane network element, a second transport layer feedback message to an application server based on the first transport layer feedback message, wherein the second transport layer feedback message comprises information indicating a network status of the to-be-monitored service flow.

30. A communication method, comprising:
sending, by an application server to a policy control function network element, indication information indicating to externally expose network status information of a to-be-monitored service flow by using a transport layer;
determining, by the policy control function network element, a monitoring policy of the to-be-monitored service flow and a network status information exposure policy based on the indication information indicating to expose the network status information of the to-be-monitored service flow by using the transport layer, wherein the monitoring policy is for determining monitoring configuration information of the to-be-monitored service flow, the monitoring configuration information is for monitoring a network status of the to-be-monitored service flow, the network status information exposure policy is for determining a network status information exposure rule, and the network status information exposure rule is for determining a manner of exposing the network status information of the to-be-monitored service flow by using the transport layer;
sending, by the policy control function network element, the monitoring policy and the network status information exposure policy to a session management network element;
sending, by the session management network element, the network status information exposure rule to a user plane network element based on the network status information exposure policy, wherein the network status information exposure rule is for determining the manner of exposing the network status information of the to-be-monitored service flow by using the transport layer; and
sending, by the session management network element, the monitoring configuration information of the to-be-monitored service flow to an access network device based on the monitoring policy, wherein the monitoring configuration information is for monitoring the network status of the to-be-monitored service flow.
